# NEW EUROPEAN PATENT SPECIFICATION

(11) **EP 3 413 735 B2**
(45) Date of publication and mention of the opposition decision: **08.10.2025**
(45) Mention of the grant of the patent: 28.10.2020
(21) Application number: 17750885.0
(22) Date of filing: 10.02.2017
(51) Int. Cl.: A24F 40/51

(54) **VAPORIZER DEVICES WITH BLOW DISCRIMINATION**
VERDAMPFERVORRICHTUNGEN MIT BLASUNTERSCHEIDUNG
DISPOSITIFS DE VAPORISATION AVEC DISTINCTION DE SOUFFLE

(30) Priority: 11.02.2016 US 201662294271 P
(43) Date of publication of application: 19.12.2018
(60) Divisional application: 20204100.0
(73) Proprietor: Juul Labs, Inc., Washington DC 20004 (US)
(72) Inventor: HATTON, Nicholas Jay, San Francisco, CA 94107 (US); CHRISTENSEN, Steven, San Francisco, CA 94107 (US)
(74) Representative: Thum, Bernhard
(86) International application number: PCT/US2017/017496
(87) International publication number: WO 2017/139662

(56) References cited:
- EP-A1- 2 110 034
- WO-A1-2014/205263
- WO-A1-2015/149368
- WO-A1-2015/149368
- WO-A1-2015/172224
- WO-A1-2015/172224
- WO-A2-2015/052513
- DE-A1- 102007 011 120
- GB-A- 2 507 104
- US-A- 5 261 424
- US-A1- 2012 186 594
- US-A1- 2012 186 594
- US-A1- 2012 186 594
- US-A1- 2013 233 086
- US-A1- 2013 233 086
- US-A1- 2013 233 086
- US-A1- 2014 116 426
- US-A1- 2014 276 536
- US-A1- 2015 068 523
- US-A1- 2015 068 523
- US-A1- 2015 068 523
- US-A1- 2015 114 409
- US-A1- 2015 208 729
- US-A1- 2015 208 729
- US-B1- 6 196 218
- US-B1- 6 196 218
- COSTELLO, SUZANNE MARC P Y, DESMULLIEZ: "Hermeticity testing of MEMS", LIBRARY OF CONGRES CATALOGING- IN- PUBLICATION DATA, 1 October 2013 (2013-10-01), pages 1 - 20, XP055934037
- DINIZ PAULO S. R., DA SILVA EDUARDO A. B., NETTO SERGIO L.: "Digital Signal Processing", SYSTEM ANALYSIS AND DESIGN, 1 September 2010 (2010-09-01), pages 1 - 191, XP055934041
- SHA ZHANYOU, WANG X., WANG Y., MA H.: "Optimal Design of Switching Power Supply", WILEY, 1 September 2015 (2015-09-01), pages 1 - 4, XP055934048

## Description

### FIELD

Described herein are electronic inhalable aerosol devices, or electronic vaping devices, and particularly electronic aerosol devices which can accurately differentiate between blowing and drawing (sucking) through the mouthpiece and adjust the control of the vaporizer accordingly.

### BACKGROUND

Electronic cigarettes are typically battery-powered vaporizers that simulate the feeling of smoking, but without tobacco. Instead of cigarette smoke, the user inhales an aerosol, commonly called vapor, typically released by a heating element that atomizes a liquid solution (vaporizable material or solution). Typically, the user activates the e-cigarette by taking a puff or pressing a button. Some vaporizers look like traditional cigarettes, but they come in many variations.
US 2015/0208729 A1 describes a system to generate an inhalable vapor in an electronic vaporization device. WO 2015/172224 A1 describes an electrically-powered hookah apparatus. WO 2015/149368 A1 describes an airflow sensor assembly for electronic cigarettes. US 2015/0068523 A1 describes a pressure sensitive device for flow detection. US 2013/0233086 A1 describes a pressure sensor measuring the detection of a MEMS membrane using a capacitive read-out method. US 2012/0186594 A1 describes an electronic smoke comprising an inhale detector and a smoke effect generating circuitry.

Many electronic cigarettes use a pressure sensor to determine when the device should be heating or not. This may allow for an intuitive user interface where the user simply draws from (sucks on) the device to power it. It is advantageous over powering the device with a button in that the device's heating element is only powered when there is airflow over it assuming the device's pressure sensor and microcontroller can accurately detect the start and end of a draw.

Unfortunately, the vast majority of electronic cigarettes described and currently in use have an unexpected failure mode which may reduce the life of the battery and the overall device. Specifically, such devices may inadvertently (and transiently) detect a draw or inhalation following blowing or exhalation through the device. A recent test of numerous pressure sensor-based electronic cigarettes currently on the market found that these devices can easily be turned on and apply power to the heating element by blowing rather than inhaling into the mouthpiece of the device as if the user had drawn from the device. Specifically, such devices falsely indicate a draw (inhalation) and activate the heater at the end of a blow into the device because they detect a pressure drop at the end of the blow, and falsely interpret this is the start of a draw. Depending on the controller for the vaporizer, this pressure drop at the end of a blow may power the heater for some amount of time, and potentially until a timeout for max draw time. This failure mode may result in the device heating without the user drawing on it, which pay provide a non-ideal user experience, may waste of battery life and vaporizable material, and in devices without temp control may overheat the vaporizable material, which can produce e-juice degradants that taste bad and are potentially more harmful when vaporized that the original contents of the e-juice formulation.

Many commercially available electronic cigarettes use pressure sensors that are mechanically similar to electret microphones, but packaged with an ASIC (application specific integrated circuit) instead of a standard electret microphone circuit. An electret microphone is an electrostatic capacitor-based microphone that does not require a polarizing power supply. Pressure sensors of this type typically accept two power signals and have one output signal to indicate whether or not a pressure drop was recently detected. For the pressure sensor's ASIC to accommodate changes in environment conditions (humidity and temperature), slight differences in mechanical assembly from sensor to sensor, and potential shifting of parts in the mechanical assembly from vibration or drop, the ASIC's output usually depends on changes in capacitance between the sensor's conductive diaphragm (which deflects with a pressure differential across it) and a conductive static plate in the sensor instead of depending on absolute measured capacitance crossing some threshold. Given that not all measured pressure drops indicate that the user is drawing from the device, this approach is not ideal.

In all electronic cigarettes tested (some of which may not use the standard modified electret microphone with ASIC), the device can be made to start heating at the end of a blow into the device's air/vapor outlet. In devices in which direct capacitance measurements may be made by the microcontroller, the same behavior can be produced, meaning there is no software actively handling blows into the device correctly.

This failure mode may be largely unnoticed, but it is relevant based on many user practices. For example, some electronic cigarette users hold devices in their mouths, resulting in blowing into the device. Devices that don't adequately distinguish between drawing and the end of a blowing into the mouthpiece may start heating after a user has exhaled onto the device.

The present invention therefore provides a vaporizer device body and a vaporizer device as defined in the present claims 1 and 8, which address the problem identified above.

### SUMMARY OF THE DISCLOSURE

The present disclosure relates generally to apparatuses, including systems and devices, for vaporizing material to form an inhalable aerosol. Specifically, these apparatuses may include vaporizers.

In particular, described herein are apparatuses including vaporizers that are adapted to prevent one or more failure modes that may result from blowing into the mouthpiece, which may be referred to herein as blow rejection or blow discrimination. In general, such vaporizers and methods of operating a vaporizer include a pressure sensor that regulates the baseline pressure readings (which may be actual pressure readings or may be unconverted sensor readings, such as capacitance measurements) during a blow and/or a draw through the mouthpiece to prevent instability that may otherwise result from blowing into the mouthpiece.

For example, described herein are vaporizer devices comprising: a reservoir configured to hold a vaporizable material; a heater configured to heat the vaporizable material; a mouthpiece in communication with the reservoir; a pressure sensor comprising a differential pressure sensor (e.g., MEMS, capacitive membrane, etc.) configured to output instantaneous sensor readings; and a microcontroller, wherein the microcontroller is configured to: determine a baseline based on filtering the instantaneous sensor readings; hold the baseline at a prior value of the baseline while the instantaneous sensor readings are above the baseline by a first offset value or below the baseline by a second offset value; compare the instantaneous sensor readings to the baseline and activate the heater to generate vapor from the vaporizable material when the instantaneous sensor readings are offset from the baseline by more than a third offset value indicating suction is being applied to the mouthpiece.

A vaporizer device useful for understanding the invention includes a reservoir configured to hold a vaporizable material; a heater configured to heat the vaporizable material; a mouthpiece in communication with the reservoir; a pressure sensor configured to output instantaneous sensor readings; and a microcontroller, wherein the microcontroller is configured to: determine a baseline based on filtering the instantaneous sensor readings; hold the baseline at a prior value of the baseline while the instantaneous sensor readings are above the baseline by a first offset value or below the baseline by a second offset value; compare the instantaneous sensor readings to the baseline and activate the heater to generate vapor from the vaporizable material when the instantaneous sensor readings are below the baseline by more than a third offset value indicating suction is being applied to the mouthpiece.

A vaporizer device resistive heating element includes: a reservoir configured to hold a vaporizable material; a heater configured to heat the vaporizable material; a mouthpiece in communication with the reservoir; a pressure sensor configured to output instantaneous sensor readings; and a microcontroller, wherein the microcontroller is configured to: determine a baseline based on filtering the instantaneous sensor readings; hold the baseline at a prior value of the baseline while the instantaneous sensor readings are above the baseline by a first offset value or below the baseline by a second offset value; compare the instantaneous sensor readings to the baseline and activate the heater to generate vapor from the vaporizable material when the instantaneous sensor readings are above the baseline by more than a third offset value indicating suction is being applied to the mouthpiece.

According to the invention, the first side of the pressure sensor is exposed to a first air path through the mouthpiece and a second side of the pressure sensor is exposed to a second air path open to ambient pressure. The second air path can be sealed from the first air path by a gasket around the pressure sensor. The third offset value may be the same as the second offset value or the third offset value may be the same as the first offset value. The first offset value may be zero, or the second offset value is zero.

The instantaneous pressure sensor output may be capacitance or pressure.

In general, the pressure sensors described herein may be any differential pressure sensor, such as MEMS, capacitive pressures sensors (e.g., including a capacitive membrane), or any force collector type pressure sensors that use a transducer to measure pressure or pressure differences (e.g., diaphragm, piston, etc.), piezorestrictive, electromagnetic, piezoelectric, optical, potentiometric, resonant (including MEMS), etc. Differential pressure sensors may measure the distance between two pressures, one connected on different sides of the sensor. This includes pressure sensors in which one side is open/connected to ambient atmosphere (pressure).

The microcontroller may be configured to determine the baseline based on filtering the instantaneous sensor output by low pass filtering the instantaneous sensor output.

The microcontroller may be configured to determine the baseline based on filtering the instantaneous sensor output by taking a running average of the instantaneous sensor output.

The microcontroller may further be configured to stop activating the heater to generate vapor when the instantaneous sensor output is offset from the baseline by less than the third offset value.

Also described herein are methods useful for understanding the invention of controlling a vaporizer device to prevent heating after blowing on a mouthpiece of the vaporizer device that include: taking instantaneous sensor readings from a pressure sensor in the vaporizer device, wherein the pressure sensor comprises a capacitive membrane; determining a baseline by filtering the instantaneous sensor readings; holding the baseline at a prior value of the baseline while the instantaneous sensor readings are above the baseline by a first offset value; holding the baseline at a prior value of the baseline while the instantaneous sensor readings are below the baseline by a second offset value; comparing the instantaneous sensor readings to the baseline and activating a heater in the vaporizer to generate vapor from a vaporizable material when the instantaneous sensor output is offset from the baseline by more than a third offset value, indicating that suction is being applied to the mouthpiece.

A method not covered by the claims of controlling a vaporizer device to prevent heating after blowing on a mouthpiece of the vaporizer device may include: taking instantaneous sensor readings from a pressure sensor in the vaporizer device, wherein the pressure sensor comprises a capacitive membrane; determining a baseline by filtering the instantaneous sensor readings; holding the baseline at a prior value of the baseline while the instantaneous sensor readings are above the baseline; holding the baseline at a prior value of the baseline while the instantaneous sensor readings are below the baseline by an offset value; comparing the instantaneous sensor readings to the baseline and activating a heater in the vaporizer to generate vapor from a vaporizable material when the instantaneous sensor output is below the baseline by more than the offset value indicating that suction is being applied to the mouthpiece.

In some variations, apparatuses useful for understanding the claims described herein may include an inhalable aerosol comprising: an oven comprising an oven chamber and a heater for heating a vapor forming medium in the oven chamber to generate a vapor; a condenser comprising a condensation chamber in which at least a fraction of the vapor condenses to form the inhalable aerosol; an air inlet that originates a first airflow path that includes the oven chamber; and an aeration vent that originates a second airflow path that allows air from the aeration vent to join the first airflow path prior to or within the condensation chamber and downstream from the oven chamber thereby forming a joined path, wherein the joined path is configured to deliver the inhalable aerosol formed in the condensation chamber to a user.

The oven may be within a body of the device. The device may further comprise a mouthpiece, wherein the mouthpiece comprises at least one of the air inlet, the aeration vent, and the condenser. The mouthpiece may be separable from the oven. The mouthpiece may be integral to a body of the device, wherein the body comprises the oven. The device may further comprise a body that comprises the oven, the condenser, the air inlet, and the aeration vent. The mouthpiece may be separable from the body.

In some variations, the oven chamber may comprise an oven chamber inlet and an oven chamber outlet, and the oven further comprises a first valve at the oven chamber inlet, and a second valve at the oven chamber outlet. The aeration vent may comprise a third valve. The first valve, or said second valve may be chosen from the group of a check valve, a clack valve, a non-return valve, and a one-way valve. The third valve may be chosen from the group of a check valve, a clack valve, a non-return valve, and a one-way valve. The first or second valve may be mechanically actuated. The first or second valve may be electronically actuated. The first valve or second valve may be manually actuated. The third valve may be mechanically actuated. The third valve may be mechanically actuated. The third valve may be electronically actuated. The third valve may be manually actuated.

In some variations, the device may further comprise a body that comprises at least one of: a power source, a printed circuit board, a switch, and a temperature regulator. The device may further comprise a temperature regulator in communication with a temperature sensor. The temperature sensor may be the heater. The power source may be rechargeable. The power source may be removable. The oven may further comprise an access lid. The vapor forming medium may comprise tobacco. The vapor forming medium may comprise a botanical. The vapor forming medium may be heated in the oven chamber wherein the vapor forming medium may comprise a humectant to produce the vapor, wherein the vapor comprises a gas phase humectant. The vapor may be mixed in the condensation chamber with air from the aeration vent to produce the inhalable aerosol comprising particle diameters of average size of about 1 micron. The vapor forming medium may be heated in the oven chamber, wherein the vapor is mixed in the condensation chamber with air from the aeration vent to produce the inhalable aerosol comprising particle diameters of average size of less than or equal to 0.9 micron. The vapor forming medium may be heated in the oven chamber, wherein the vapor is mixed in the condensation chamber with air from the aeration vent to produce the inhalable aerosol comprising particle diameters of average size of less than or equal to 0.8 micron. The vapor forming medium may be heated in the oven chamber, wherein the vapor is mixed in the condensation chamber with air from the aeration vent to produce the inhalable aerosol comprising particle diameters of average size of less than or equal to 0.7 micron. The vapor forming medium may be heated in the oven chamber, wherein the vapor is mixed in the condensation chamber with air from the aeration vent to produce the inhalable aerosol comprising particle diameters of average size of less than or equal to 0.6 micron. The vapor forming medium may be heated in the oven chamber, wherein the vapor is mixed in the condensation chamber with air from the aeration vent to produce the inhalable aerosol comprising particle diameters of average size of less than or equal to 0.5 micron.

In some variations, the humectant may comprise glycerol as a vapor-forming medium. The humectant may comprise vegetable glycerol. The humectant may comprise propylene glycol. The humectant may comprise a ratio of vegetable glycerol to propylene glycol. The ratio may be about 100:0 vegetable glycerol to propylene glycol. The ratio may be about 90:10 vegetable glycerol to propylene glycol. The ratio may be about 80:20 vegetable glycerol to propylene glycol. The ratio may be about 70:30 vegetable glycerol to propylene glycol. The ratio may be about 60:40 vegetable glycerol to propylene glycol. The ratio may be about 50:50 vegetable glycerol to propylene glycol. The humectant may comprise a flavorant. The vapor forming medium may be heated to its pyrolytic temperature. The vapor forming medium may heated to 200° C at most. The vapor forming medium may be heated to 160° C at most. The inhalable aerosol may be cooled to a temperature of about 50° - 70° C at most, before exiting the aerosol outlet of the mouthpiece.

Also described herein are methods not covered by the claims for generating an inhalable aerosol. Such a method may comprise: providing an inhalable aerosol generating device wherein the device comprises: an oven comprising an oven chamber and a heater for heating a vapor forming medium in the oven chamber and for forming a vapor therein; a condenser comprising a condensation chamber in which the vapor forms the inhalable aerosol; an air inlet that originates a first airflow path that includes the oven chamber; and an aeration vent that originates a second airflow path that allows air from the aeration vent to join the first airflow path prior to or within the condensation chamber and downstream from the oven chamber thereby forming a joined path, wherein the joined path is configured to deliver the inhalable aerosol formed in the condensation chamber to a user.

The oven may be within a body of the device. The device may further comprise a mouthpiece, wherein the mouthpiece comprises at least one of the air inlet, the aeration vent, and the condenser. The mouthpiece may be separable from the oven. The mouthpiece may be integral to a body of the device, wherein the body comprises the oven. The method may further comprise a body that comprises the oven, the condenser, the air inlet, and the aeration vent. The mouthpiece may be separable from the body.

The oven chamber may comprise an oven chamber inlet and an oven chamber outlet, and the oven further comprises a first valve at the oven chamber inlet, and a second valve at the oven chamber outlet.

The vapor forming medium may comprise tobacco. The vapor forming medium may comprise a botanical. The vapor forming medium may be heated in the oven chamber wherein the vapor forming medium may comprise a humectant to produce the vapor, wherein the vapor comprises a gas phase humectant. The vapor may comprise particle diameters of average mass of about 1 micron. The vapor may comprise particle diameters of average mass of about 0.9 micron. The vapor may comprise particle diameters of average mass of about 0.8 micron. The vapor may comprise particle diameters of average mass of about 0.7 micron. The vapor may comprise particle diameters of average mass of about 0.6 micron. The vapor may comprise particle diameters of average mass of about 0.5 micron.

In some variations, the humectant may comprise glycerol as a vapor-forming medium. The humectant may comprise vegetable glycerol. The humectant may comprise propylene glycol. The humectant may comprise a ratio of vegetable glycerol to propylene glycol. The ratio may be about 100:0 vegetable glycerol to propylene glycol. The ratio may be about 90:10 vegetable glycerol to propylene glycol. The ratio may be about 80:20 vegetable glycerol to propylene glycol. The ratio may be about 70:30 vegetable glycerol to propylene glycol. The ratio may be about 60:40 vegetable glycerol to propylene glycol. The ratio may be about 50:50 vegetable glycerol to propylene glycol. The humectant may comprise a flavorant. The vapor forming medium may be heated to its pyrolytic temperature. The vapor forming medium may heated to 200° C at most. The vapor forming medium may be heated to 160° C at most. The inhalable aerosol may be cooled to a temperature of about 50° - 70° C at most, before exiting the aerosol outlet of the mouthpiece.

The device may be user serviceable. The device may not be user serviceable.

A method not covered by the claims for generating an inhalable aerosol may include: providing a vaporization device, wherein said device produces a vapor comprising particle diameters of average mass of about 1 micron or less, wherein said vapor is formed by heating a vapor forming medium in an oven chamber to a first temperature below the pyrolytic temperature of said vapor forming medium, and cooling said vapor in a condensation chamber to a second temperature below the first temperature, before exiting an aerosol outlet of said device.

A method of manufacturing a device for generating an inhalable aerosol may include in an aspect useful for understanding the invention: providing said device comprising a mouthpiece comprising an aerosol outlet at a first end of the device; an oven comprising an oven chamber and a heater for heating a vapor forming medium in the oven chamber and for forming a vapor therein, a condenser comprising a condensation chamber in which the vapor forms the inhalable aerosol, an air inlet that originates a first airflow path that includes the oven chamber and then the condensation chamber, an aeration vent that originates a second airflow path that joins the first airflow path prior to or within the condensation chamber after the vapor is formed in the oven chamber, wherein the joined first airflow path and second airflow path are configured to deliver the inhalable aerosol formed in the condensation chamber through the aerosol outlet of the mouthpiece to a user.

The method may further comprise providing the device comprising a power source or battery, a printed circuit board, a temperature regulator or operational switches.

A device for generating an inhalable aerosol useful for understanding the invention comprises a mouthpiece comprising an aerosol outlet at a first end of the device and an air inlet that originates a first airflow path; an oven comprising an oven chamber that is in the first airflow path and includes the oven chamber and a heater for heating a vapor forming medium in the oven chamber and for forming a vapor therein; a condenser comprising a condensation chamber in which the vapor forms the inhalable aerosol; and an aeration vent that originates a second airflow path that allows air from the aeration vent to join the first airflow path prior to or within the condensation chamber and downstream from the oven chamber thereby forming a joined path, wherein the joined path is configured to deliver the inhalable aerosol formed in the condensation chamber through the aerosol outlet of the mouthpiece to a user.

A device for generating an inhalable aerosol useful for understanding the invention comprises: a mouthpiece comprising an aerosol outlet at a first end of the device, an air inlet that originates a first airflow path, and an aeration vent that originates a second airflow path that allows air from the aeration vent to join the first airflow path; an oven comprising an oven chamber that is in the first airflow path and includes the oven chamber and a heater for heating a vapor forming medium in the oven chamber and for forming a vapor therein; and a condenser comprising a condensation chamber in which the vapor forms the inhalable aerosol and wherein air from the aeration vent joins the first airflow path prior to or within the condensation chamber and downstream from the oven chamber thereby forming a joined path, wherein the joined path is configured to deliver the inhalable aerosol through the aerosol outlet of the mouthpiece to a user.

A device for generating an inhalable aerosol according to the invention comprises: a device body comprising a cartridge receptacle; a cartridge comprising: a fluid storage compartment, and a channel integral to an exterior surface of the cartridge, and an air inlet passage formed by the channel and an internal surface of the cartridge receptacle when the cartridge is inserted into the cartridge receptacle; wherein the channel forms a first side of the air inlet passage, and an internal surface of the cartridge receptacle forms a second side of the air inlet passage.

A device for generating an inhalable aerosol according to the invention comprises: a device body comprising a cartridge receptacle; a cartridge comprising: a fluid storage compartment, and a channel integral to an exterior surface of the cartridge, and an air inlet passage formed by the channel and an internal surface of the cartridge receptacle when the cartridge is inserted into the cartridge receptacle; wherein the channel forms a first side of the air inlet passage, and an internal surface of the cartridge receptacle forms a second side of the air inlet passage.

The channel may comprise at least one of a groove, a trough, a depression, a dent, a furrow, a trench, a crease, and a gutter. The integral channel may comprise walls that are either recessed into the surface or protrude from the surface where it is formed. The internal side walls of the channel may form additional sides of the air inlet passage. The cartridge may further comprise a second air passage in fluid communication with the air inlet passage to the fluid storage compartment, wherein the second air passage is formed through the material of the cartridge. The cartridge may further comprise a heater. The heater may be attached to a first end of the cartridge.

The heater may comprise a heater chamber, a first pair of heater contacts, a fluid wick, and a resistive heating element in contact with the wick, wherein the first pair of heater contacts comprise thin plates affixed about the sides of the heater chamber, and wherein the fluid wick and resistive heating element are suspended there between. The first pair of heater contacts may further comprise a formed shape that comprises a tab having a flexible spring value that extends out of the heater to couple to complete a circuit with the device body. The first pair of heater contacts may be a heat sink that absorbs and dissipates excessive heat produced by the resistive heating element. The first pair of heater contacts may contact a heat shield that protects the heater chamber from excessive heat produced by the resistive heating element. The first pair of heater contacts may be press-fit to an attachment feature on the exterior wall of the first end of the cartridge. The heater may enclose a first end of the cartridge and a first end of the fluid storage compartment. The heater may comprise a first condensation chamber. The heater may comprise more than one first condensation chamber. The first condensation chamber may be formed along an exterior wall of the cartridge. The cartridge may further comprise a mouthpiece. The mouthpiece may be attached to a second end of the cartridge. The mouthpiece may comprise a second condensation chamber. The mouthpiece may comprise more than one second condensation chamber. The second condensation chamber may be formed along an exterior wall of the cartridge.

The cartridge may comprise a first condensation chamber and a second condensation chamber. The first condensation chamber and the second condensation chamber may be in fluid communication. The mouthpiece may comprise an aerosol outlet in fluid communication with the second condensation chamber. The mouthpiece may comprise more than one aerosol outlet in fluid communication with more than one the second condensation chamber. The mouthpiece may enclose a second end of the cartridge and a second end of the fluid storage compartment.

The device may comprise an airflow path comprising an air inlet passage, a second air passage, a heater chamber, a first condensation chamber, a second condensation chamber, and an aerosol outlet. The airflow path may comprise more than one air inlet passage, a heater chamber, more than one first condensation chamber, more than one second condensation chamber, more than one second condensation chamber, and more than one aerosol outlet. The heater may be in fluid communication with the fluid storage compartment. The fluid storage compartment may be capable of retaining condensed aerosol fluid. The condensed aerosol fluid may comprise a nicotine formulation. The condensed aerosol fluid may comprise a humectant. The humectant may comprise propylene glycol. The humectant may comprise vegetable glycerin.

The cartridge is detachable. The cartridge may be receptacle and the detachable cartridge forms a separable coupling. The separable coupling may comprise a friction assembly, a snap-fit assembly or a magnetic assembly. The cartridge may comprise a fluid storage compartment, a heater affixed to a first end with a snap-fit coupling, and a mouthpiece affixed to a second end with a snap-fit coupling.

A device for generating an inhalable aerosol useful for understanding the invention comprises: a device body comprising a cartridge receptacle for receiving a cartridge; wherein an interior surface of the cartridge receptacle forms a first side of an air inlet passage when a cartridge comprising a channel integral to an exterior surface is inserted into the cartridge receptacle, and wherein the channel forms a second side of the air inlet passage.

A device for generating an inhalable aerosol useful for understanding the invention comprises: a device body comprising a cartridge receptacle for receiving a cartridge; wherein the cartridge receptacle comprises a channel integral to an interior surface and forms a first side of an air inlet passage when a cartridge is inserted into the cartridge receptacle, and wherein an exterior surface of the cartridge forms a second side of the air inlet passage.

A cartridge for a device for generating an inhalable aerosol useful for understanding the invention includes: a fluid storage compartment; a channel integral to an exterior surface, wherein the channel forms a first side of an air inlet passage; and wherein an internal surface of a cartridge receptacle in the device forms a second side of the air inlet passage when the cartridge is inserted into the cartridge receptacle.

A cartridge for a device for generating an inhalable aerosol useful for understanding the invention comprises: a fluid storage compartment, wherein an exterior surface of the cartridge forms a first side of an air inlet channel when inserted into a device body comprising a cartridge receptacle, and wherein the cartridge receptacle further comprises a channel integral to an interior surface, and wherein the channel forms a second side of the air inlet passage.

The cartridge may further comprise a second air passage in fluid communication with the channel, wherein the second air passage is formed through the material of the cartridge from an exterior surface of the cartridge to the fluid storage compartment.

The cartridge may comprise at least one of: a groove, a trough, a depression, a dent, a furrow, a trench, a crease, and a gutter. The integral channel may comprise walls that are either recessed into the surface or protrude from the surface where it is formed. The internal side walls of the channel may form additional sides of the air inlet passage.

A device for generating an inhalable aerosol may comprise: a cartridge comprising; a fluid storage compartment; a heater affixed to a first end comprising; a first heater contact, a resistive heating element affixed to the first heater contact; a device body comprising; a cartridge receptacle for receiving the cartridge; a second heater contact adapted to receive the first heater contact and to complete a circuit; a power source connected to the second heater contact; a printed circuit board (PCB) connected to the power source and the second heater contact; wherein the PCB is configured to detect the absence of fluid based on the measured resistance of the resistive heating element, and turn off the device.

The printed circuit board (PCB) may comprise a microcontroller; switches; circuitry comprising a reference resister; and an algorithm comprising logic for control parameters; wherein the microcontroller cycles the switches at fixed intervals to measure the resistance of the resistive heating element relative to the reference resistor, and applies the algorithm control parameters to control the temperature of the resistive heating element.

The micro-controller may instruct the device to turn itself off when the resistance exceeds the control parameter threshold indicating that the resistive heating element is dry.

A cartridge for a device for generating an inhalable aerosol may comprise: a fluid storage compartment; a heater affixed to a first end comprising: a heater chamber, a first pair of heater contacts, a fluid wick, and a resistive heating element in contact with the wick; wherein the first pair of heater contacts comprise thin plates affixed about the sides of the heater chamber, and wherein the fluid wick and resistive heating element are suspended there between.

The first pair of heater contacts may further comprise: a formed shape that comprises a tab having a flexible spring value that extends out of the heater to complete a circuit with the device body. The heater contacts may be configured to mate with a second pair of heater contacts in a cartridge receptacle of the device body to complete a circuit. The first pair of heater contacts may also be a heat sink that absorbs and dissipates excessive heat produced by the resistive heating element. The first pair of heater contacts may be a heat shield that protect the heater chamber from excessive heat produced by the resistive heating element.

A cartridge for a device for generating an inhalable aerosol may comprise: a heater comprising; a heater chamber, a pair of thin plate heater contacts therein, a fluid wick positioned between the heater contacts, and a resistive heating element in contact with the wick; wherein the heater contacts each comprise a fixation site wherein the resistive heating element is tensioned therebetween.

A cartridge for a device for generating an inhalable aerosol may comprise a heater, wherein the heater is attached to a first end of the cartridge.

The heater may enclose a first end of the cartridge and a first end of the fluid storage compartment. The heater may comprise more than one first condensation chamber. The heater may comprise a first condensation chamber. The condensation chamber may be formed along an exterior wall of the cartridge.

A cartridge for a device for generating an inhalable aerosol may comprise a fluid storage compartment; and a mouthpiece, wherein the mouthpiece is attached to a second end of the cartridge.

The mouthpiece may enclose a second end of the cartridge and a second end of the fluid storage compartment. The mouthpiece may comprise a second condensation chamber. The mouthpiece may comprise more than one second condensation chamber. The second condensation chamber may be formed along an exterior wall of the cartridge.

A cartridge for a device for generating an inhalable aerosol may comprise: a fluid storage compartment; a heater affixed to a first end; and a mouthpiece affixed to a second end; wherein the heater comprises a first condensation chamber and the mouthpiece comprises a second condensation chamber.

The heater may comprise more than one first condensation chamber and the mouthpiece comprises more than one second condensation chamber. The first condensation chamber and the second condensation chamber may be in fluid communication. The mouthpiece may comprise an aerosol outlet in fluid communication with the second condensation chamber. The mouthpiece may comprise two to more aerosol outlets. The cartridge may meet ISO recycling standards. The cartridge may meet ISO recycling standards for plastic waste.

A device for generating an inhalable aerosol may comprise: a device body comprising a cartridge receptacle; and a detachable cartridge; wherein the cartridge receptacle and the detachable cartridge form a separable coupling, wherein the separable coupling comprises a friction assembly, a snap-fit assembly or a magnetic assembly.

A method of fabricating a device for generating an inhalable aerosol useful for understanding the invention comprises: providing a device body comprising a cartridge receptacle; and providing a detachable cartridge; wherein the cartridge receptacle and the detachable cartridge form a separable coupling comprising a friction assembly, a snap-fit assembly or a magnetic assembly.

A method of fabricating a cartridge for a device for generating an inhalable aerosol useful for understanding the invention comprises: providing a fluid storage compartment; affixing a heater to a first end with a snap-fit coupling; and affixing a mouthpiece to a second end with a snap-fit coupling.

A cartridge for a device for generating an inhalable aerosol with an airflow path may include: a channel comprising a portion of an air inlet passage; a second air passage in fluid communication with the channel; a heater chamber in fluid communication with the second air passage; a first condensation chamber in fluid communication with the heater chamber; a second condensation chamber in fluid communication with the first condensation chamber; and an aerosol outlet in fluid communication with second condensation chamber.

A cartridge for a device for generating an inhalable aerosol may comprise: a fluid storage compartment; a heater affixed to a first end; and a mouthpiece affixed to a second end; wherein said mouthpiece comprises two or more aerosol outlets.

A system for providing power to an electronic device for generating an inhalable vapor useful for understanding the invention comprises; a rechargeable power storage device housed within the electronic device for generating an inhalable vapor; two or more pins that are accessible from an exterior surface of the electronic device for generating an inhalable vapor, wherein the charging pins are in electrical communication with the rechargeable power storage device; a charging cradle comprising two or more charging contacts configured to provided power to the rechargeable storage device, wherein the device charging pins are reversible such that the device is charged in the charging cradle for charging with a first charging pin on the device in contact a first charging contact on the charging cradle and a second charging pin on the device in contact with second charging contact on the charging cradle and with the first charging pin on the device in contact with second charging contact on the charging cradle and the second charging pin on the device in contact with the first charging contact on the charging cradle.

The charging pins may be visible on an exterior housing of the device. The user may permanently disable the device by opening the housing. The user may permanently destroy the device by opening the housing.

Additional aspects and advantages of the present disclosure will become readily apparent to those skilled in this art from the following detailed description, wherein only illustrative embodiments of the present disclosure are shown and described. Accordingly, the drawings and description are to be regarded as illustrative in nature, and not as restrictive.

### BRIEF DESCRIPTION OF THE DRAWINGS

FIG. 1 is an illustrative cross-sectional view of an exemplary vaporization device.
FIG. 2 is an illustrative cross-sectional view of an exemplary vaporization device with various electronic features and valves.
FIG. 3 is an illustrative sectional view of another exemplary vaporization device comprising a condensation chamber, air inlet and aeration vent in the mouthpiece.
FIGS. 4A-4C is an illustrative example of an oven section of another exemplary vaporization device configuration with an access lid, comprising an oven having an air inlet, air outlet, and an additional aeration vent in the airflow pathway, after the oven.
FIG. 5 is an illustrative isometric view of an assembled inhalable aerosol device.
FIGS. 6A-6D are illustrative arrangements and section views of the device body and sub-components.
FIG. 7A is an illustrative isometric view of an assembled cartridge.
FIG. 7B is an illustrative exploded isometric view of a cartridge assembly
FIG. 7C is a side section view of Figure 3A illustrating the inlet channel, inlet hole and relative placement of the wick, resistive heating element, and heater contacts, and the heater chamber inside of the heater.
FIG. 8A is an illustrative end section view of an exemplary cartridge inside the heater.
FIG. 8B is an illustrative side view of the cartridge with the cap removed and heater shown in shadow / outline.
FIG. 9 is an illustrative sequence of the assembly method for the cartridge.
FIGS. 10A-10C are illustrative sequences showing the airflow / vapor path for the cartridge.
FIGS. 11-13 represent an illustrative assembly sequence for assembling the main components of the device.
FIG. 14 illustrates front, side and section views of the assembled inhalable aerosol device.
FIG. 15 is an illustrative view of an activated, assembled inhalable aerosol device.
FIGS. 16A-16C are representative illustrations of a charging device for the aerosol device and the application of the charger with the device.
FIGS. 17A and 17B are representative illustrations of a proportional-integral-derivative controller (PID) block diagram and circuit diagram representing the essential components in a device to control coil temperature.
FIG. 18 is a device with charging contacts visible from an exterior housing of the device.
FIG. 19 is an exploded view of a charging assembly of a device.
FIG. 20 is a detailed view of a charging assembly of a device.
FIG. 21 is a detailed view of charging pins in a charging assembly of a device.
FIG. 22 is a device in a charging cradle.
FIG. 23 is a circuit provided on a PCB configured to permit a device to comprise reversible charging contacts.
FIGS. 24A-24D illustrate schematics for one variation of a pressure sensor that may be used with any of the apparatuses described herein. FIGS. 24A-24C show dimensional drawings of the bottom, side and top, respectively, while FIG. 24D shows a section through the structure. In some variations pins may replace the solder pads labeled "gate" and "ground" in FIG. 24C.
FIG. 25 is a sectional view of a schematic illustration through one variation of a vaporizer device as described herein, showing an air path through the device.
FIG. 26 is a graph illustrating draw detection using an apparatus as described herein, illustrating tracking of multiple draws.
FIG. 27 is a graph illustrating blow detection (and rejection) and draw detection using an apparatus as described herein.

### DETAILED DESCRIPTION

Provided herein are systems and methods for generating a vapor from a material. The vapor may be delivered for inhalation by a user. The material may be a solid, liquid, powder, solution, paste, gel, or any a material with any other physical consistency. The vapor may be delivered to the user for inhalation by a vaporization device. The vaporization device may be a handheld vaporization device. The vaporization device may be held in one hand by the user.

The vaporization device may comprise one or more heating elements the heating element may be a resistive heating element. The heating element may heat the material such that the temperature of the material increases. Vapor may be generated as a result of heating the material. Energy may be required to operate the heating element, the energy may be derived from a battery in electrical communication with the heating element. Alternatively a chemical reaction (e.g., combustion or other exothermic reaction) may provide energy to the heating element.

One or more aspects of the vaporization device may be designed and/or controlled in order to deliver a vapor with one or more specified properties to the user. For example, aspects of the vaporization device that may be designed and/or controlled to deliver the vapor with specified properties may comprise the heating temperature, heating mechanism, device air inlets, internal volume of the device, and/or composition of the material.

In some cases, a vaporization device may have an "atomizer" or "cartomizer" configured to heat an aerosol forming solution (e.g., vaporizable material). The aerosol forming solution may comprise glycerin and/or propylene glycol. The vaporizable material may be heated to a sufficient temperature such that it may vaporize.

An atomizer may be a device or system configured to generate an aerosol. The atomizer may comprise a small heating element configured to heat and/or vaporize at least a portion of the vaporizable material and a wicking material that may draw a liquid vaporizable material in to the atomizer. The wicking material may comprise silica fibers, cotton, ceramic, hemp, stainless steel mesh, and/or rope cables. The wicking material may be configured to draw the liquid vaporizable material in to the atomizer without a pump or other mechanical moving part. A resistance wire may be wrapped around the wicking material and then connected to a positive and negative pole of a current source (e.g., energy source). The resistance wire may be a coil. When the resistance wire is activated the resistance wire (or coil) may have a temperature increase as a result of the current flowing through the resistive wire to generate heat. The heat may be transferred to at least a portion of the vaporizable material through conductive, convective, and/or radiative heat transfer such that at least a portion of the vaporizable material vaporizes.

Alternatively or in addition to the atomizer, the vaporization device may comprise a "cartomizer" to generate an aerosol from the vaporizable material for inhalation by the user. The cartomizer may comprise a cartridge and an atomizer. The cartomizer may comprise a heating element surrounded by a liquid-soaked poly-foam that acts as holder for the vaporiable material (e.g., the liquid). The cartomizer may be reusable, rebuildable, refillable, and/or disposable. The cartomizer may be used with a tank for extra storage of a vaporizable material.

Air may be drawn into the vaporization device to carry the vaporized aerosol away from the heating element, where it then cools and condenses to form liquid particles suspended in air, which may then be drawn out of the mouthpiece by the user.

The vaporization of at least a portion of the vaporizable material may occur at lower temperatures in the vaporization device compared to temperatures required to generate an inhalable vapor in a cigarette. A cigarette may be a device in which a smokable material is burned to generate an inhalable vapor. The lower temperature of the vaporization device may result in less decomposition and/or reaction of the vaporized material, and therefore produce an aerosol with many fewer chemical components compared to a cigarette. In some cases, the vaporization device may generate an aerosol with fewer chemical components that may be harmful to human health compared to a cigarette. Additionally, the vaporization device aerosol particles may undergo nearly complete evaporation in the heating process, the nearly complete evaporation may yield an average particle size (e.g., diameter) value that may be smaller than the average particle size in tobacco or botanical based effluent.

A vaporization device may be a device configured to extract for inhalation one or more active ingredients of plant material, tobacco, and/or a botanical, or other herbs or blends. A vaporization device may be used with pure chemicals and/or humectants that may or may not be mixed with plant material. Vaporization may be alternative to burning (smoking) that may avoid the inhalation of many irritating and/or toxic carcinogenic by-products which may result from the pyrolytic process of burning tobacco or botanical products above 300° C. The vaporization device may operate at a temperature at or below 300° C.

A vaporizer (e.g., vaporization device) may not have an atomizer or cartomizer. Instead the device may comprise an oven. The oven may be at least partially closed. The oven may have a closable opening. The oven may be wrapped with a heating element, alternatively the heating element may be in thermal communication with the oven through another mechanism. A vaporizable material may be placed directly in the oven or in a cartridge fitted in the oven. The heating element in thermal communication with the oven may heat a vaporizable material mass in order to create a gas phase vapor. The heating element may heat the vaporizable material through conductive, convective, and/or radiative heat transfer. The vapor may be released to a vaporization chamber where the gas phase vapor may condense, forming an aerosol cloud having typical liquid vapor particles with particles having a diameter of average mass of approximately 1 micron or greater. In some cases the diameter of average mass may be approximately 0.1-1 micron.

A used herein, the term "vapor" may generally refer to a substance in the gas phase at a temperature lower than its critical point. The vapor may be condensed to a liquid or to a solid by increasing its pressure without reducing the temperature.

As used herein, the term "aerosol" may generally refer to a colloid of fine solid particles or liquid droplets in air or another gas. Examples of aerosols may include clouds, haze, and smoke, including the smoke from tobacco or botanical products. The liquid or solid particles in an aerosol may have varying diameters of average mass that may range from monodisperse aerosols, producible in the laboratory, and containing particles of uniform size; to polydisperse colloidal systems, exhibiting a range of particle sizes. As the sizes of these particles become larger, they have a greater settling speed which causes them to settle out of the aerosol faster, making the appearance of the aerosol less dense and to shorten the time in which the aerosol will linger in air. Interestingly, an aerosol with smaller particles will appear thicker or denser because it has more particles. Particle number has a much bigger impact on light scattering than particle size (at least for the considered ranges of particle size), thus allowing for a vapor cloud with many more smaller particles to appear denser than a cloud having fewer, but larger particle sizes.

As used herein the term "humectant" may generally refer to as a substance that is used to keep things moist. A humectant may attract and retain moisture in the air by absorption, allowing the water to be used by other substances. Humectants are also commonly used in many tobaccos or botanicals and electronic vaporization products to keep products moist and as vapor-forming medium. Examples include propylene glycol, sugar polyols such as glycerol, glycerin, and honey.

### Rapid Aeration

In some cases, the vaporization device may be configured to deliver an aerosol with a high particle density. The particle density of the aerosol may refer to the number of the aerosol droplets relative to the volume of air (or other dry gas) between the aerosol droplets. A dense aerosol may easily be visible to a user. In some cases the user may inhale the aerosol and at least a fraction of the aerosol particles may impinge on the lungs and/or mouth of the user. The user may exhale residual aerosol after inhaling the aerosol. When the aerosol is dense the residual aerosol may have sufficient particle density such that the exhaled aerosol is visible to the user. In some cases, a user may prefer the visual effect and/or mouth feel of a dense aerosol.

A vaporization device may comprise a vaporizable material. The vaporizable material may be contained in a cartridge or the vaporizable material may be loosely placed in one or more cavities the vaporization device. A heating element may be provided in the device to elevate the temperature of the vaporizable material such that at least a portion of the vaporizable material forms a vapor. The heating element may heat the vaporizable material by convective heat transfer, conductive heat transfer, and/or radiative heat transfer. The heating element may heat the cartridge and/or the cavity in which the vaporizable material is stored.

Vapor formed upon heating the vaporizable material may be delivered to the user. The vapor may be transported through the device from a first position in the device to a second position in the device. In some cases, the first position may be a location where at least a portion of the vapor was generated, for example, the cartridge or cavity or an area adjacent to the cartridge or cavity. The second position may be a mouthpiece. The user may suck on the mouthpiece to inhale the vapor.

At least a fraction of the vapor may condense after the vapor is generated and before the vapor is inhaled by the user. The vapor may condense in a condensation chamber. The condensation chamber may be a portion of the device that the vapor passes through before delivery to the user. In some cases, the device may include at least one aeration vent, placed in the condensation chamber of the vaporization device. The aeration vent may be configured to introduce ambient air (or other gas) into the vaporization chamber. The air introduced into the vaporization chamber may have a temperature lower than the temperature of a gas and/or gas/vapor mixture in the condensation chamber. Introduction of the relatively lower temperature gas into the vaporization chamber may provide rapid cooling of the heated gas vapor mixture that was generated by heating the vaporizable material. Rapid cooling of the gas vapor mixture may generate a dense aerosol comprising a high concentration of liquid droplets having a smaller diameter and/or smaller average mass compared to an aerosol that is not rapidly cooled prior to inhalation by the user.

An aerosol with a high concentration of liquid droplets having a smaller diameter and/or smaller average mass compared to an aerosol that is not rapidly cooled prior to inhalation by the user may be formed in a two-step process. The first step may occur in the oven chamber where the vaporizable material (e.g., tobacco and/or botanical and humectant blend) may be heated to an elevated temperature. At the elevated temperature, evaporation may happen faster than at room temperature and the oven chamber may fill with the vapor phase of the humectants. The humectant may continue to evaporate until the partial pressure of the humectant is equal to the saturation pressure. At this point, the gas is said to have a saturation ratio of 1 (S = Ppartial/Psat).

In the second step, the gas (e.g., vapor and air) may exit the oven and enter a condenser or condensation chamber and begin to cool. As the gas phase vapor cools, the saturation pressure may decrease. As the saturation pressure decreases, the saturation ratio may increase and the vapor may begin to condense, forming droplets. In some devices, with the absence of added cooling aeration, the cooling may be relatively slower such that high saturation pressures may not be reached, and the droplets that form in the devices without added cooling aeration may be relatively larger and fewer in numbers. When cooler air is introduced, a temperature gradient may be formed between the cooler air and the relatively warmer gas in the device. Mixing between the cooler air and the relatively warmer gas in a confined space inside of the vaporization device may lead to rapid cooling. The rapid cooling may generate high saturation ratios, small particles, and high concentrations of smaller particles, forming a thicker, denser vapor cloud compared to particles generated in a device without the aeration vents.

For the purpose of this disclosure, when referring to ratios of humectants such as vegetable glycerol or propylene glycol, "about" means a variation of 5%, 10%, 20% or 25% depending on the embodiment.

For the purpose of this disclosure, when referring to a diameter of average mass in particle sizes, "about" means a variation of 5%, 10%, 20% or 25% depending on the embodiment.

A vaporization device configured to rapidly cool a vapor may comprise: a mouthpiece comprising an aerosol outlet at a first end of the device; an oven comprising an oven chamber and a heater for heating a vapor forming medium in the oven chamber and for forming a vapor therein; a condenser comprising a condensation chamber in which the vapor forms the inhalable aerosol; an air inlet that originates a first airflow path that includes the oven chamber and then the condensation chamber, an aeration vent that originates a second airflow path that joins the first airflow path prior to or within the condensation chamber after the vapor is formed in the oven chamber, wherein the joined first airflow path and second airflow path are configured to deliver the inhalable aerosol formed in the condensation chamber through the aerosol outlet of the mouthpiece to a user.

In some embodiments, the oven is within a body of the device. The oven chamber may comprise an oven chamber inlet and an oven chamber outlet. The oven may further comprise a first valve at the oven chamber inlet, and a second valve at the oven chamber outlet.

The oven may be contained within a device housing. In some cases the body of the device may comprise the aeration vent and/or the condenser. The body of the device may comprise one or more air inlets. The body of the device may comprise a housing that holds and/or at least partially contains one or more elements of the device.

The mouthpiece may be connected to the body. The mouthpiece may be connected to the oven. The mouthpiece may be connected to a housing that at least partially encloses the oven. In some cases, the mouthpiece may be separable from the oven, the body, and/or the housing that at least partially encloses the oven. The mouthpiece may comprise at least one of the air inlet, the aeration vent, and the condenser. The mouthpiece may be integral to the body of the device. The body of the device may comprise the oven.

In some cases, the one or more aeration vents may comprise a valve. The valve may regulate a flow rate of air entering the device through the aeration vent. The valve may be controlled through a mechanical and/or electrical control system.

A vaporization device configured to rapidly cool a vapor may comprise: a body, a mouthpiece, an aerosol outlet, a condenser with a condensation chamber, a heater, an oven with an oven chamber, a primary airflow inlet, and at least one aeration vent provided in the body, downstream of the oven, and upstream of the mouthpiece.

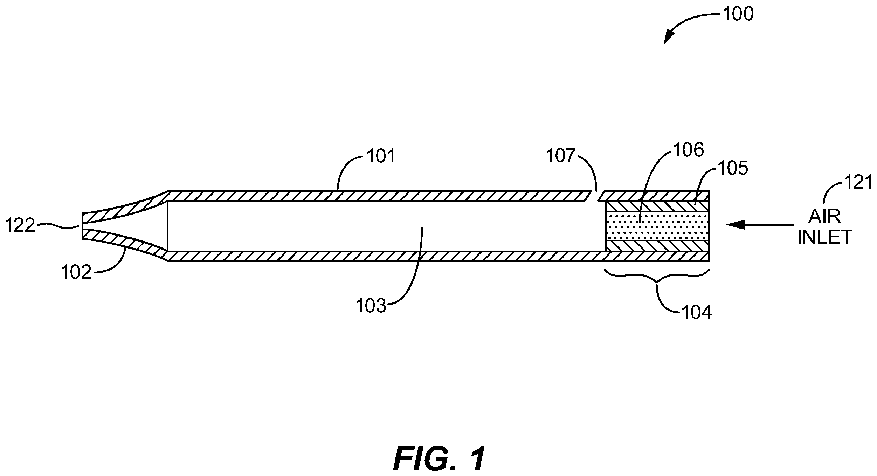

FIG. 1 shows an example of a vaporization device configured to rapidly cool a vapor. The device 100, may comprise a body 101. The body may house and/or integrate with one or more components of the device. The body may house and/or integrate with a mouthpiece 102. The mouthpiece 102 may have an aerosol outlet 122. A user may inhale the generated aerosol through the aerosol outlet 122 on the mouthpiece 102. The body may house and/or integrate with an oven region 104. The oven region 104 may comprise an oven chamber where vapor forming medium 106 may be placed. The vapor forming medium may include tobacco and/or botanicals, with or without a secondary humectant. In some cases the vapor forming medium may be contained in a removable and/or refillable cartridge.

Air may be drawn into the device through a primary air inlet 121. The primary air inlet 121 may be on an end of the device 100 opposite the mouthpiece 102. Alternatively, the primary air inlet 121 may be adjacent to the mouthpiece 102. In some cases, a pressure drop sufficient to pull air into the device through the primary air inlet 121 may be due to a user puffing on the mouthpiece 102.

The vapor forming medium (e.g., vaporizable material) may be heated in the oven chamber by a heater 105, to generate elevated temperature gas phases (vapor) of the tobacco or botanical and humectant / vapor forming components. The heater 105 may transfer heat to the vapor forming medium through conductive, convective, and/or radiative heat transfer. The generated vapor may be drawn out of the oven region and into the condensation chamber 103a, of the condenser 103 where the vapors may begin to cool and condense into micro-particles or droplets suspended in air, thus creating the initial formation of an aerosol, before being drawn out of the mouthpiece through the aerosol outlet 122.

In some cases, relatively cooler air may be introduced into the condensation chamber 103a, through an aeration vent 107 such that the vapor condenses more rapidly compared to a vapor in a device without the aeration vent 107. Rapidly cooling the vapor may create a denser aerosol cloud having particles with a diameter of average mass of less than or equal to about 1 micron, and depending on the mixture ratio of the vapor-forming humectant, particles with a diameter of average mass of less than or equal to about 0.5 micron

Also described herein are devices for generating an inhalable aerosol said device comprising a body with a mouthpiece at one end, an attached body at the other end comprising a condensation chamber, a heater, an oven, wherein the oven comprises a first valve in the airflow path at the primary airflow inlet of the oven chamber, and a second valve at the outlet end of the oven chamber, and at least one aeration vent provided in the body, downstream of the oven, and upstream of the mouthpiece.

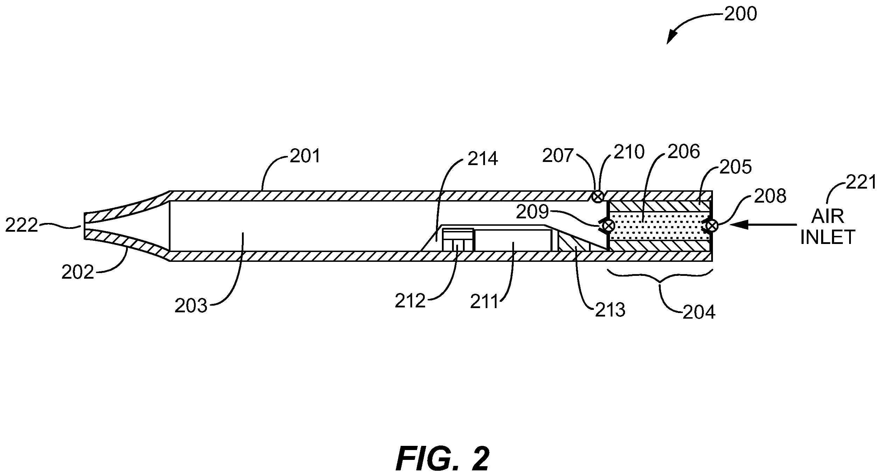

FIG. 2 shows a diagram of an alternative embodiment of the vaporization device 200. The vaporization device may have a body 201. The body 201 may integrate with and/or contain one or more components of the device. The body may integrate with or be connected to a mouthpiece 202

The body may comprise an oven region 204, with an oven chamber 204a having a first constricting valve 208 in the primary air inlet of the oven chamber and a second constricting valve 209 at the oven chamber outlet. The oven chamber 204a may be sealed with a tobacco or botanical and/or humectant / vapor forming medium 206 therein. The seal may be an air tight and/or liquid tight seal. The heater may be provided to the oven chamber with a heater 205. The heater 205 may be in thermal communication with the oven, for example the heater may be surrounding the oven chamber during the vaporization process. Heater may contact the oven. The heater may be wrapped around the oven. Before inhalation and before air is drawn in through a primary air inlet 221, pressure may build in the sealed oven chamber as heat is continually added. The pressure may build due to a phase change of the vaporizable material. Elevated temperature gas phases (vapor) of the tobacco or botanical and humectant / vapor forming components may be achieved by continually adding heat to the oven. This heated pressurization process may generate even higher saturation ratios when the valves 208, 209 are opened during inhalation. The higher saturation ratios may cause relatively higher particle concentrations of gas phase humectant in the resultant aerosol. When the vapor is drawn out of the oven region and into the condensation chamber 203a of the condenser 203, for example by inhalation by the user, the gas phase humectant vapors may be exposed to additional air through an aeration vent 207, and the vapors may begin to cool and condense into droplets suspended in air. As described previously the aerosol may be drawn through the mouthpiece 222 by the user. This condensation process may be further refined by adding an additional valve 210, to the aeration vent 207 to further control the air-vapor mixture process.

FIG. 2 also illustrates an exemplary embodiment of the additional components which would be found in a vaporizing device, including a power source or battery 211, a printed circuit board 212, a temperature regulator 213, and operational switches (not shown), housed within an internal electronics housing 214, to isolate them from the damaging effects of the moisture in the vapor and/or aerosol. The additional components may be found in a vaporizing device that may or may not comprise an aeration vent as described above.

In some embodiments of the vaporization device, components of the device are user serviceable, such as the power source or battery. These components may be replaceable or rechargeable.

Also described herein are devices for generating an inhalable aerosol said device comprising a first body, a mouthpiece having an aerosol outlet, a condensation chamber within a condenser and an airflow inlet and channel, an attached second body, comprising a heater and oven with an oven chamber, wherein said airflow channel is upstream of the oven and the mouthpiece outlet to provide airflow through the device, across the oven, and into the condensation chamber where an auxiliary aeration vent is provided.

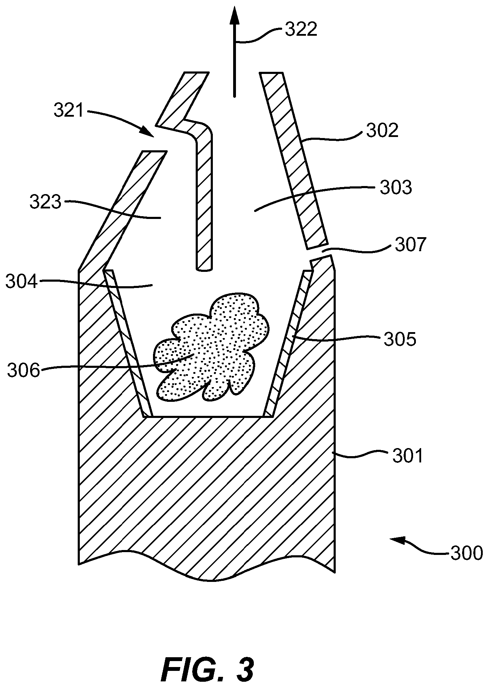

FIG. 3 shows a section view of a vaporization device 300. The device 300 may comprise a body 301. The body may be connected to or integral with a mouthpiece 302 at one end. The mouthpiece may comprise a condensation chamber 303a within a condenser section 303 and an airflow inlet 321 and air channel 323. The device body may comprise a proximally located oven 304 comprising an oven chamber 304a. The oven chamber may be in the body of the device. A vapor forming medium 306 (e.g., vaporizable material) comprising tobacco or botanical and humectant vapor forming medium may be placed in the oven. The vapor forming medium may be in direct contact with an air channel 323 from the mouthpiece. The tobacco or botanical may be heated by heater 305 surrounding the oven chamber, to generate elevated temperature gas phases (vapor) of the tobacco or botanical and humectant / vapor forming components and air drawn in through a primary air inlet 321, across the oven, and into the condensation chamber 303a of the condenser region 303 due to a user puffing on the mouthpiece. Once in the condensation chamber where the gas phase humectant vapors begin to cool and condense into droplets suspended in air, additional air is allowed to enter through aeration vent 307, thus, once again creating a denser aerosol cloud having particles with a diameter of average mass of less than a typical vaporization device without an added aeration vent, before being drawn out of the mouthpiece through the aerosol outlet 322.

The device may comprises a mouthpiece comprising an aerosol outlet at a first end of the device and an air inlet that originates a first airflow path; an oven comprising an oven chamber that is in the first airflow path and includes the oven chamber and a heater for heating a vapor forming medium in the oven chamber and for forming a vapor therein, a condenser comprising a condensation chamber in which the vapor forms the inhalable aerosol, an aeration vent that originates a second airflow path that allows air from the aeration vent to join the first airflow path prior to or within the condensation chamber and downstream from the oven chamber thereby forming a joined path, wherein the joined path is configured to deliver the inhalable aerosol formed in the condensation chamber through the aerosol outlet of the mouthpiece to a user.

The device may comprise a mouthpiece comprising an aerosol outlet at a first end of the device, an air inlet that originates a first airflow path, and an aeration vent that originates a second airflow path that allows air from the aeration vent to join the first airflow path; an oven comprising an oven chamber that is in the first airflow path and includes the oven chamber and a heater for heating a vapor forming medium in the oven chamber and for forming a vapor therein, a condenser comprising a condensation chamber in which the vapor forms the inhalable aerosol and wherein air from the aeration vent joins the first airflow path prior to or within the condensation chamber and downstream from the oven chamber thereby forming a joined path, wherein the joined path is configured to deliver the inhalable aerosol through the aerosol outlet of the mouthpiece to a user, as illustrated in exemplary FIG. 3.

The device may comprise a body with one or more separable components. For example, the mouthpiece may be separably attached to the body comprising the condensation chamber, a heater, and an oven, as illustrated in exemplary FIGS. 1 or 2.

The device may comprise a body with one or more separable components. For example, the mouthpiece may be separably attached to the body. The mouthpiece may comprise the condensation chamber, and may be attached to or immediately adjacent to the oven and which is separable from the body comprising a heater, and the oven, as illustrated in exemplary FIG. 3.

The at least one aeration vent may be located in the condensation chamber of the condenser, as illustrated in exemplary FIGS. 1, 2, or 3 . The at least one aeration vent may comprise a third valve in the airflow path of the at least one aeration vent, as illustrated in exemplary FIG. 2. The first, second and third valve is a check valve, a clack valve, a non-return valve, or a one-way valve. In any of the preceding variations, the first, second or third valve may be mechanically actuated, electronically actuated or manually actuated. One skilled in the art will recognize after reading this disclosure that this device may be modified in a way such that any one, or each of these openings or vents could be configured to have a different combination or variation of mechanisms as described to control airflow, pressure and temperature of the vapor created and aerosol being generated by these device configurations, including a manually operated opening or vent with or without a valve.

The device may further comprise at least one of: a power source, a printed circuit board, a switch, and a temperature regulator. Alternately, one skilled in the art would recognize that each configuration previously described will also accommodate said power source (battery), switch, printed circuit board, or temperature regulator as appropriate, in the body.

The device may be disposable when the supply of pre-packaged aerosol-forming media is exhausted. Alternatively, the device may be rechargeable such that the battery may be rechargeable or replaceable, and /or the aerosol-forming media may be refilled, by the user/operator of the device. Still further, the device may be rechargeable such that the battery may be rechargeable or replaceable, and/or the operator may also add or refill a tobacco or botanical component, in addition to a refillable or replaceable aerosol-forming media to the device.

As illustrated in FIGS. 1, 2 or 3, the vaporization device may comprise tobacco or a botanical heated in said oven chamber, wherein said tobacco or botanical further comprises humectants to produce an aerosol comprising gas phase components of the humectant and tobacco or botanical. The gas phase humectant and tobacco or botanical vapor produced by said heated aerosol forming media 106, 206, 306 may further be mixed with air from a special aeration vent 107, 207, 307 after exiting the oven area 104, 204, 304 and entering a condensation chamber 103a, 203a, 303a to cool and condense said gas phase vapors to produce a far denser, thicker aerosol comprising more particles than would have otherwise been produced without the extra cooling air, with a diameter of average mass of less than or equal to about 1 micron.

Each aerosol configuration produced by mixing the gas phase vapors with the cool air may comprise a different range of particles, for example; with a diameter of average mass of less than or equal to about 0.9 micron; less than or equal to about 0.8 micron; less than or equal to about 0.7 micron; less than or equal to about 0.6 micron; and even an aerosol comprising particle diameters of average mass of less than or equal to about 0.5 micron.

The possible variations and ranges of aerosol density are great in that the possible number of combinations of temperature, pressure, tobacco or botanical choices and humectant selections are numerous. However, by excluding the tobacco or botanical choices and limiting the temperatures ranges and the humectant ratios to those described herein, the inventor has demonstrated that this device will produce a far denser, thicker aerosol comprising more particles than would have otherwise been produced without the extra cooling air, with a diameter of average mass of less than or equal to about 1 micron.

The humectant may comprise glycerol or vegetable glycerol as a vapor-forming medium.

The humectant may comprise propylene glycol as a vapor-forming medium.

In preferred embodiments, the humectant may comprise a ratio of vegetable glycerol to propylene glycol as a vapor-forming medium. The ranges of said ratio may vary between a ratio of about 100:0 vegetable glycerol to propylene glycol and a ratio of about 50:50 vegetable glycerol to propylene glycol. The difference in preferred ratios within the above stated range may vary by as little as 1, for example, said ratio may be about 99:1 vegetable glycerol to propylene glycol. However, more commonly said ratios would vary in increments of about 5, for example, about 95:5 vegetable glycerol to propylene glycol; or about 85:15 vegetable glycerol to propylene glycol; or about 55:45 vegetable glycerol to propylene glycol.

In a preferred embodiment the ratio for the vapor forming medium will be between the ratios of about 80:20 vegetable glycerol to propylene glycol, and about 60:40 vegetable glycerol to propylene glycol.

In a most preferred embodiment, the ratio for the vapor forming medium will be about 70:30 vegetable glycerol to propylene glycol.

In any of the preferred embodiments, the humectant may further comprise flavoring products. These flavorings may include enhancers comprising cocoa solids, licorice, tobacco or botanical extracts, and various sugars, to name but a few.

The tobacco or botanical may be heated in the oven up to its pyrolytic temperature, which as noted previously is most commonly measured in the range of 300 - 1000° C.

In preferred embodiments, the tobacco or botanical is heated to about 300° C at most. In other preferred embodiments, the tobacco or botanical is heated to about 200° C at most. In still other preferred embodiments, the tobacco or botanical is heated to about 160° C at most. It should be noted that in these lower temperature ranges (< 300° C), pyrolysis of tobacco or botanical does not typically occur, yet vapor formation of the tobacco or botanical components and flavoring products does occur. In addition, vapor formation of the components of the humectant, mixed at various ratios will also occur, resulting in nearly complete vaporization, depending on the temperature, since propylene glycol has a boiling point of about 180° - 190° C and vegetable glycerin will boil at approximately 280° - 290° C.

In still other preferred embodiments, the aerosol produced by said heated tobacco or botanical and humectant is mixed with air provided through an aeration vent.

In still other preferred embodiments, the aerosol produced by said heated tobacco or botanical and humectant mixed with air, is cooled to a temperature of about 50° - 70° C at most, and even as low as 35° C before exiting the mouthpiece, depending on the air temperature being mixed into the condensation chamber. In some embodiments, the temperature is cooled to about 35° - 55° C at most, and may have a fluctuating range of ± about 10° C or more within the overall range of about 35° - 70° C.

Also described herein are vaporization devices for generating an inhalable aerosol comprising a unique oven configuration, wherein said oven comprises an access lid and an auxiliary aeration vent located within the airflow channel immediately downstream of the oven and before the aeration chamber. In this configuration, the user may directly access the oven by removing the access lid, providing the user with the ability to recharge the device with vaporization material.

In addition, having the added aeration vent in the airflow channel immediately after the oven and ahead of the vaporization chamber provides the user with added control over the amount of air entering the aeration chamber downstream and the cooling rate of the aerosol before it enters the aeration chamber.

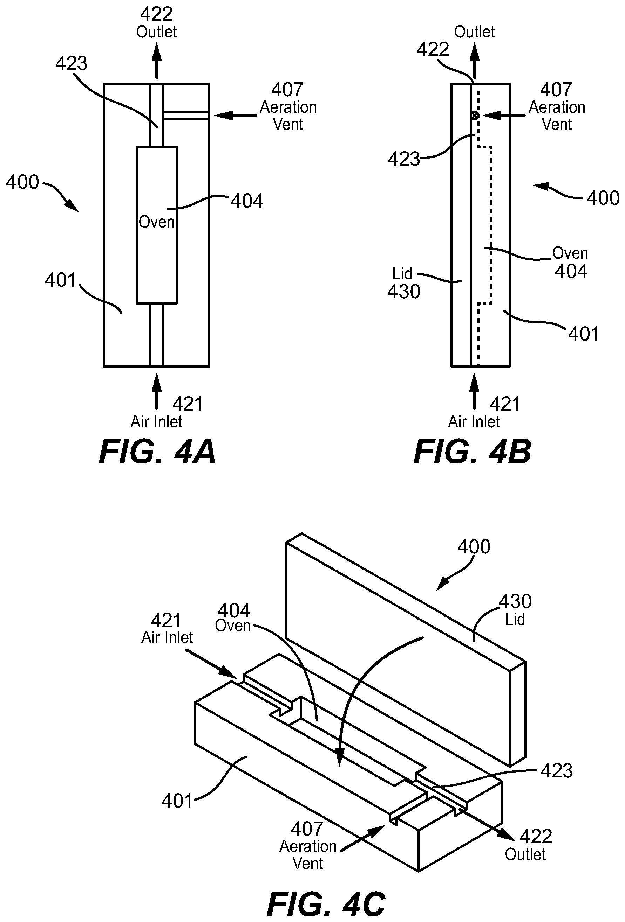

As noted in FIGS. 4A-4C, the device 400 may comprise a body 401, having an air inlet 421 allowing initial air for the heating process into the oven region 404. After heating the tobacco or botanical, and humectant (heater not shown), the gas phase humectant vapor generated may travel down the airflow channel 423, passing the added aeration vent 407 wherein the user may selectively increase airflow into the heated vapor. The user may selectively increase and/or decrease the airflow to the heated vapor by controlling a valve in communication with the aeration vent 407. In some cases, the device may not have an aeration vent. Airflow into the heated vapor through the aeration vent may decrease the vapor temperature before exiting the airflow channel at the outlet 422, and increase the condensation rate and vapor density by decreasing the diameter of the vapor particles within the aeration chamber (not shown), thus producing a thicker, denser vapor compared to the vapor generated by a device without the aeration vent.. The user may also access the oven chamber 404a to recharge or reload the device 400, through an access lid 430 provided therein, making the device user serviceable. The access lid may be provided on a device with or without an aeration vent.

Provided herein is a method for generating an inhalable aerosol, the method comprising: providing an vaporization device, wherein said device produces a vapor comprising particle diameters of average mass of about 1 micron or less, wherein the vapor is formed by heating a vapor forming medium in an oven chamber of the device to a first temperature below the pyrolytic temperature of the vapor forming medium, and cooling the vapor in a condensation chamber to a temperature below the first temperature, before exiting an aerosol outlet of said device.

In some embodiments the vapor may be cooled by mixing relatively cooler air with the vapor in the condensation chamber during the condensation phase, after leaving the oven, where condensation of the gas phase humectants occurs more rapidly due to high saturation ratios being achieved at the moment of aeration, producing a higher concentration of smaller particles, with fewer by-products, in a denser aerosol, than would normally occur in a standard vaporization or aerosol generating device.

In some embodiments, formation of an inhalable aerosol is a two-step process. The first step occurs in the oven where the tobacco or botanical and humectant blend is heated to an elevated temperature. At the elevated temperature, evaporation happens faster than at room temperature and the oven chamber fills with the vapor phase of the humectants. The humectant will continue to evaporate until the partial pressure of the humectant is equal to the saturation pressure. At this point, the gas is said to have a saturation ratio of 1 (S = Ppartial/Psat).

In the second step, the gas leaves the oven chamber, passes to a condensation chamber in a condenser and begins to cool. As the gas phase vapor cools, the saturation pressure also goes down, causing the saturation ratio to rise, and the vapor to condensate, forming droplets. When cooling air is introduced, the large temperature gradient between the two fluids mixing in a confined space leads to very rapid cooling, causing high saturation ratios, small particles, and higher concentrations of smaller particles, forming a thicker, denser vapor cloud.

Provided herein is a method for generating an inhalable aerosol comprising: a vaporization device having a body with a mouthpiece at one end, and an attached body at the other end comprising; a condenser with a condensation chamber, a heater, an oven with an oven chamber, and at least one aeration vent provided in the body, downstream of the oven, and upstream of the mouthpiece, wherein tobacco or botanical comprising a humectant is heated in said oven chamber to produce a vapor comprising gas phase humectants.

As previously described, a vaporization device having an auxiliary aeration vent located in the condensation chamber capable of supplying cool air (relative to the heated gas components) to the gas phase vapors and tobacco or botanical components exiting the oven region, may be utilized to provide a method for generating a far denser, thicker aerosol comprising more particles than would have otherwise been produced without the extra cooling air, with a diameter of average mass of less than or equal to about 1 micron.

In another aspect, provided herein is a method for generating an inhalable aerosol comprising: a vaporization device, having a body with a mouthpiece at one end, and an attached body at the other end comprising: a condenser with a condensation chamber, a heater, an oven with an oven chamber, wherein said oven chamber further comprises a first valve in the airflow path at the inlet end of the oven chamber, and a second valve at the outlet end of the oven chamber; and at least one aeration vent provided in said body, downstream of the oven, and upstream of the mouthpiece wherein tobacco or botanical comprising a humectant is heated in said oven chamber to produce a vapor comprising gas phase humectants.

As illustrated in exemplary FIG. 2, by sealing the oven chamber 204a with a tobacco or botanical and humectant vapor forming medium 206 therein, and applying heat with the heater 205 during the vaporization process, before inhalation and air is drawn in through a primary air inlet 221, the pressure will build in the oven chamber as heat is continually added with an electronic heating circuit generated through the combination of the battery 211, printed circuit board 212, temperature regulator 213, and operator controlled switches (not shown), to generate even greater elevated temperature gas phase humectants (vapor) of the tobacco or botanical and humectant vapor forming components. This heated pressurization process generates even higher saturation ratios when the valves 208, 209 are opened during inhalation, which cause higher particle concentrations in the resultant aerosol, when the vapor is drawn out of the oven region and into the condensation chamber 203a, where they are again exposed to additional air through an aeration vent 207, and the vapors begin to cool and condense into droplets suspended in air, as described previously before the aerosol is withdrawn through the mouthpiece 222. The inventor also notes that this condensation process may be further refined by adding an additional valve 210, to the aeration vent 207 to further control the air-vapor mixture process.

In some embodiments of any one of the inventive methods, the first, second and/or third valve is a one-way valve, a check valve, a clack valve, or a non-return valve. The first, second and/or third valve may be mechanically actuated. The first, second and/or third valve may be electronically actuated. The first, second and/or third valve may be automatically actuated. The first, second and/or third valve may be manually actuated either directly by a user or indirectly in response to an input command from a user to a control system that actuates the first, second and/or third valve.

In other aspects of the inventive methods, said device further comprises at least one of: a power source, a printed circuit board, or a temperature regulator.

In any of the preceding aspects of the inventive method, one skilled in the art will recognize after reading this disclosure that this method may be modified in a way such that any one, or each of these openings or vents could be configured to have a different combination or variation of mechanisms or electronics as described to control airflow, pressure and temperature of the vapor created and aerosol being generated by these device configurations, including a manually operated opening or vent with or without a valve.

The possible variations and ranges of aerosol density are great in that the possible number of temperature, pressure, tobacco or botanical choices and humectant selections and combinations are numerous. However, by excluding the tobacco or botanical choices and limiting the temperatures to within the ranges and the humectant ratios described herein, the inventor has demonstrated a method for generating a far denser, thicker aerosol comprising more particles than would have otherwise been produced without the extra cooling air, with a diameter of average mass of less than or equal to 1 micron.

In some embodiments of the inventive methods, the humectant comprises a ratio of vegetable glycerol to propylene glycol as a vapor-forming medium. The ranges of said ratio will vary between a ratio of about 100:0 vegetable glycerol to propylene glycol and a ratio of about 50:50 vegetable glycerol to propylene glycol. The difference in preferred ratios within the above stated range may vary by as little as 1, for example, said ratio may be about 99:1 vegetable glycerol to propylene glycol. However, more commonly said ratios would vary in increments of 5, for example, about 95:5 vegetable glycerol to propylene glycol; or about 85:15 vegetable glycerol to propylene glycol; or about 55:45 vegetable glycerol to propylene glycol.

Because vegetable glycerol is less volatile than propylene glycol, it will recondense in greater proportions. A humectant with higher concentrations of glycerol will generate a thicker aerosol. The addition of propylene glycol will lead to an aerosol with a reduced concentration of condensed phase particles and an increased concentration of vapor phase effluent. This vapor phase effluent is often perceived as a tickle or harshness in the throat when the aerosol is inhaled. To some consumers, varying degrees of this sensation may be desirable. The ratio of vegetable glycerol to propylene glycol may be manipulated to balance aerosol thickness with the right amount of "throat tickle."

In a preferred embodiment of the method, the ratio for the vapor forming medium will be between the ratios of about 80:20 vegetable glycerol to propylene glycol, and about 60:40 vegetable glycerol to propylene glycol.

In a most preferred embodiment of the method, the ratio for the vapor forming medium will be about 70:30 vegetable glycerol to propylene glycol. On will envision that there will be blends with varying ratios for consumers with varying preferences.

In any of the preferred embodiments of the method, the humectant further comprises flavoring products. These flavorings include enhancers such as cocoa solids, licorice, tobacco or botanical extracts, and various sugars, to name a few.

In some embodiments of the method, the tobacco or botanical is heated to its pyrolytic temperature.

In preferred embodiments of the method, the tobacco or botanical is heated to about 300° C at most.

In other preferred embodiments of the method, the tobacco or botanical is heated to about 200° C at most. In still other embodiments of the method, the tobacco or botanical is heated to about 160° C at most.

As noted previously, at these lower temperatures, (< 300° C), pyrolysis of tobacco or botanical does not typically occur, yet vapor formation of the tobacco or botanical components and flavoring products does occur. As may be inferred from the data supplied by Baker et al., an aerosol produced at these temperatures is also substantially free from Hoffman analytes or at least 70% less Hoffman analytes than a common tobacco or botanical cigarette and scores significantly better on the Ames test than a substance generated by burning a common cigarette. In addition, vapor formation of the components of the humectant, mixed at various ratios will also occur, resulting in nearly complete vaporization, depending on the temperature, since propylene glycol has a boiling point of about 180° - 190° C and vegetable glycerin will boil at approximately 280° - 290° C.

In any one of the preceding methods, said inhalable aerosol produced by tobacco or a botanical comprising a humectant and heated in said oven produces an aerosol comprising gas phase humectants is further mixed with air provided through an aeration vent.

In any one of the preceding methods, said aerosol produced by said heated tobacco or botanical and humectant mixed with air, is cooled to a temperature of about 50° - 70° C, and even as low as 35° C, before exiting the mouthpiece. In some embodiments, the temperature is cooled to about 35° - 55° C at most, and may have a fluctuating range of ± about 10° C or more within the overall range of about 35° - 70° C.

In some embodiments of the method, the vapor comprising gas phase humectant may be mixed with air to produce an aerosol comprising particle diameters of average mass of less than or equal to about 1 micron.

In other embodiments of the method, each aerosol configuration produced by mixing the gas phase vapors with the cool air may comprise a different range of particles, for example; with a diameter of average mass of less than or equal to about 0.9 micron; less than or equal to about 0.8 micron; less than or equal to about 0.7 micron; less than or equal to about 0.6 micron; and even an aerosol comprising particle diameters of average mass of less than or equal to about 0.5 micron.

### Cartridge Design and Vapor Generation from Material in Cartridge

In some cases, a vaporization device may be configured to generate an inhalable aerosol. A device may be a self-contained vaporization device. The device may comprise an elongated body which functions to complement aspects of a separable and recyclable cartridge with air inlet channels, air passages, multiple condensation chambers, flexible heater contacts, and multiple aerosol outlets. Additionally, the cartridge may be configured for ease of manufacture and assembly.

Provided herein is a vaporization device for generating an inhalable aerosol. The device may comprise a device body, a separable cartridge assembly further comprising a heater, at least one condensation chamber, and a mouthpiece. The device provides for compact assembly and disassembly of components with detachable couplings; overheat shut-off protection for the resistive heating element; an air inlet passage (an enclosed channel) formed by the assembly of the device body and a separable cartridge; at least one condensation chamber within the separable cartridge assembly; heater contacts; and one or more refillable, reusable, and/or recyclable components.

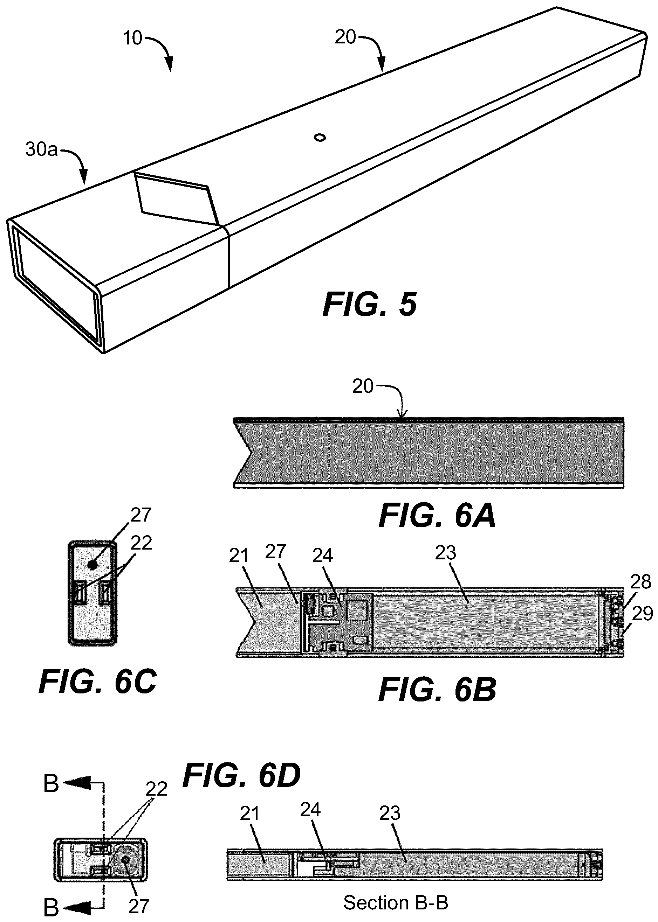

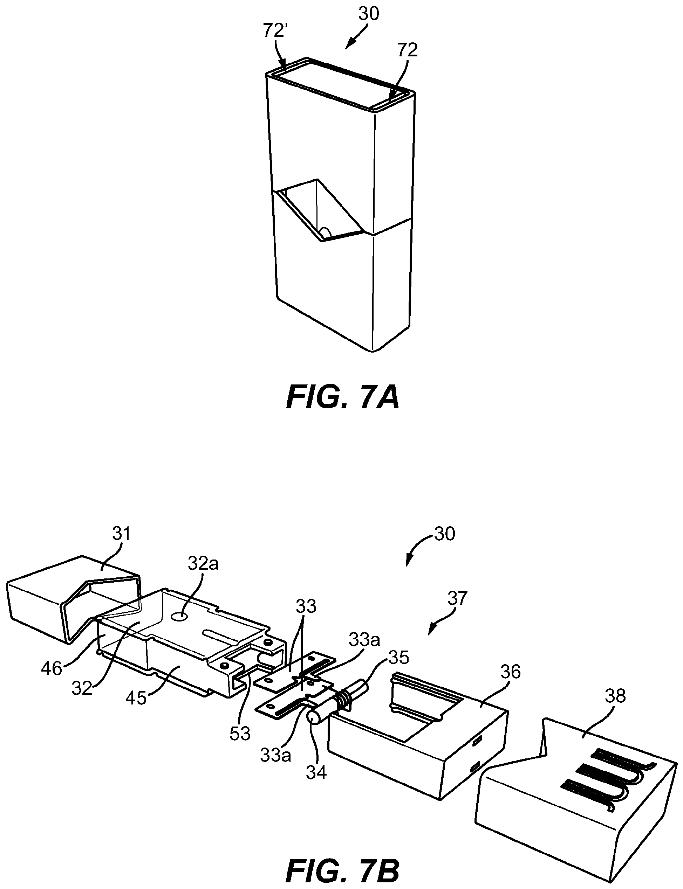

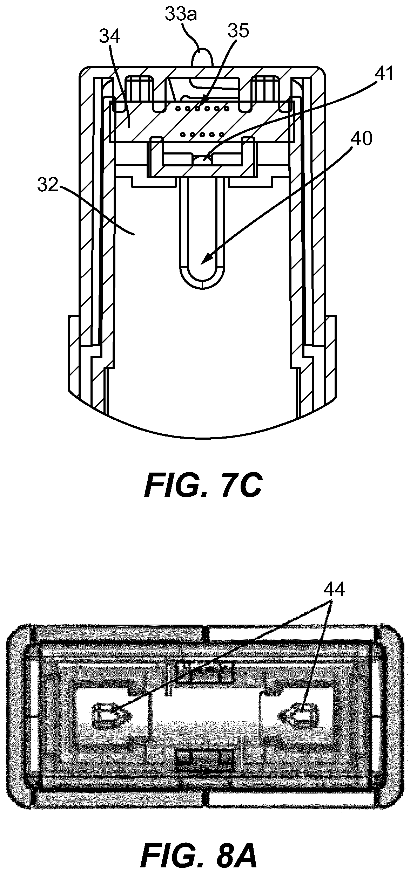

Provided herein is a device for generating an inhalable aerosol comprising: a device body comprising a cartridge receptacle; a cartridge comprising: a storage compartment, and a channel integral to an exterior surface of the cartridge, and an air inlet passage formed by the channel and an internal surface of the cartridge receptacle when the cartridge is inserted into the cartridge receptacle. The cartridge may be formed from a metal, plastic, ceramic, and/or composite material. The storage compartment may hold a vaporizable material. FIG. 7A shows an example of a cartridge 30 for use in the device. The vaporizable material may be a liquid at or near room temperature. In some cases the vaporizable material may be a liquid below room temperature. The channel may form a first side of the air inlet passage, and an internal surface of the cartridge receptacle may form a second side of the air inlet passage, as illustrated in various non-limiting aspects of FIGS. 5-6D, 7C, 8A, 8B, and 10A

Provided herein is a device for generating an inhalable aerosol. The device may comprise a body that houses, contains, and or integrates with one or more components of the device. The device body may comprise a cartridge receptacle. The cartridge receptacle may comprise a channel integral to an interior surface of the cartridge receptacle; and an air inlet passage formed by the channel and an external surface of the cartridge when the cartridge is inserted into the cartridge receptacle. A cartridge may be fitted and/or inserted into the cartridge receptacle. The cartridge may have a fluid storage compartment. The channel may form a first side of the air inlet passage, and an external surface of the cartridge forms a second side of the air inlet passage. The channel may comprise at least one of: a groove; a trough; a track; a depression; a dent; a furrow; a trench; a crease; and a gutter. The integral channel may comprise walls that are either recessed into the surface or protrude from the surface where it is formed. The internal side walls of the channel may form additional sides of the air inlet passage. The channel may have a round, oval, square, rectangular, or other shaped cross section. The channel may have a closed cross section. The channel may be about 0.1 cm, 0.5 cm, 1 cm, 2 cm, or 5 cm wide. The channel may be about 0.1 mm, 0.5 mm, 1 mm, 2 mm, or 5 mm deep. The channel may be about 0.1 cm, 0.5 cm, 1 cm, 2 cm, or 5 cm long. There may be at least 1 channel.

In some embodiments, the cartridge may further comprise a second air passage in fluid communication with the air inlet passage to the fluid storage compartment, wherein the second air passage is formed through the material of the cartridge.

FIGS. 5-7C show various views of a compact electronic device assembly 10 for generating an inhalable aerosol. The compact electronic device 10 may comprise a device body 20 with a cartridge receptacle 21 for receiving a cartridge 30. The device body may have a square or rectangular cross section. Alternatively, the cross section of the body may be any other regular or irregular shape. The cartridge receptacle may be shaped to receive an opened cartridge 30a or "pod". The cartridge may be opened when a protective cap is removed from a surface of the cartridge. In some cases, the cartridge may be opened when a hole or opening is formed on a surface of the cartridge. The pod 30a may be inserted into an open end of the cartridge receptacle 21 so that an exposed first heater contact tips 33a on the heater contacts 33 of the pod make contact with the second heater contacts 22 of the device body, thus forming the device assembly 10.

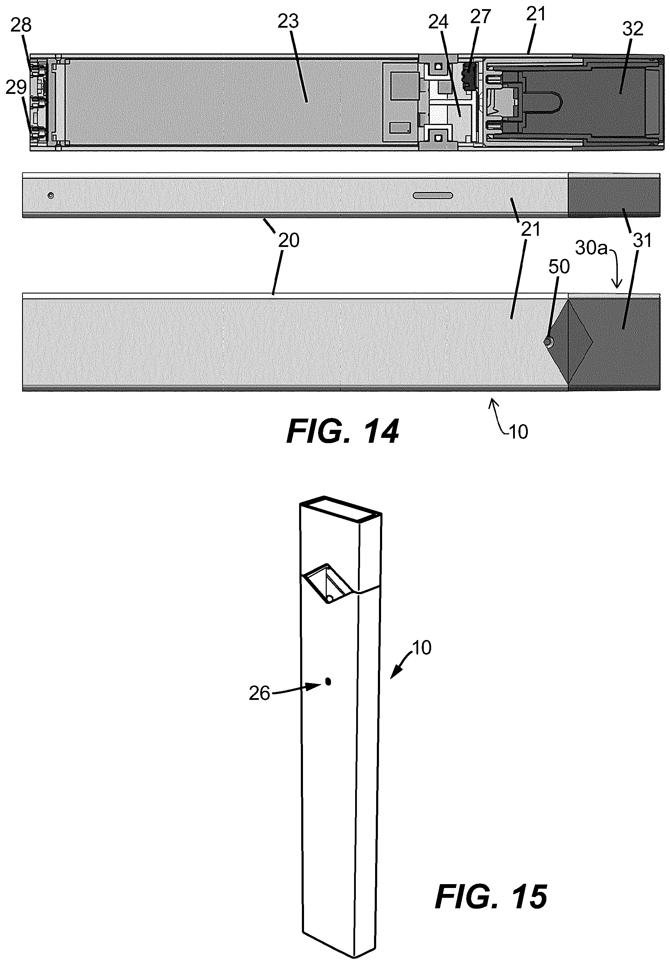

Referring to FIG. 14, it is apparent in the plan view that when the pod 30a is inserted into the notched body of the cartridge receptacle 21, the channel air inlet 50 is left exposed. The size of the channel air inlet 50 may be varied by altering the configuration of the notch in the cartridge receptacle 21.

The device body may further comprise a rechargeable battery, a printed circuit board (PCB) 24 containing a microcontroller with the operating logic and software instructions for the device, a pressure switch 27 for sensing the user's puffing action to activate the heater circuit, an indicator light 26, charging contacts (not shown), and an optional charging magnet or magnetic contact (not shown). The cartridge may further comprise a heater 36. The heater may be powered by the rechargeable battery. The temperature of the heater may be controlled by the microcontroller. The heater may be attached to a first end of the cartridge.

In some embodiments, the heater may comprise a heater chamber 37, a first pair of heater contacts 33, 33', a fluid wick 34, and a resistive heating element 35 in contact with the wick. The first pair of heater contacts may comprise thin plates affixed about the sides of the heater chamber. The fluid wick and resistive heating element may be suspended between the heater contacts.

In some embodiments, there may be two or more resistive heating elements 35, 35' and two or more wicks 34, 34'. In some of the embodiments, the heater contact 33 may comprise: a flat plate; a male contact; a female receptacle, or both; a flexible contact and/or copper alloy or another electrically conductive material. The first pair of heater contacts may further comprise a formed shape that may comprise a tab (e.g., flange) having a flexible spring value that extends out of the heater to complete a circuit with the device body. The first pair of heater contact may be a heat sink that absorb and dissipate excessive heat produced by the resistive heating element. Alternatively, the first pair of heater contacts may be a heat shield that protects the heater chamber from excessive heat produced by the resistive heating element. The first pair of heater contacts may be press-fit to an attachment feature on the exterior wall of the first end of the cartridge. The heater may enclose a first end of the cartridge and a first end of the fluid storage compartment.

As illustrated in the exploded assembly of FIG. 7B, a heater enclosure may comprises two or more heater contacts 33, each comprising a flat plate which may be machined or stamped from a copper alloy or similar electrically conductive material. The flexibility of the tip is provided by the cut-away clearance feature 33b created below the male contact point tip 33a which capitalizes on the inherent spring capacity of the metal sheet or plate material. Another advantage and improvement of this type of contact is the reduced space requirement, simplified construction of a spring contact point (versus a pogo pin) and the easy of assembly. The heater may comprise a first condensation chamber. The heater may comprise more one or more additional condensation chambers in addition to the first condensation chamber. The first condensation chamber may be formed along an exterior wall of the cartridge.

In some cases, the cartridge (e.g., pod) is configured for ease of manufacturing and assembly. The cartridge may comprise an enclosure. The enclosure may be a tank. The tank may comprise an interior fluid storage compartment 32. The interior fluid storage compartment 32 which is open at one or both ends and comprises raised rails on the side edges 45b and 46b. The cartridge may be formed from plastic, metal, composite, and/or a ceramic material. The cartridge may be rigid or flexible.

The tank may further comprise a set of first heater contact plates 33 formed from copper alloy or another electrically conductive material, having a thin cut-out 33b below the contact tips 33a (to create a flexible tab) which are affixed to the sides of the first end of the tank and straddle the open-sided end 53 of the tank. The plates may affix to pins, or posts as shown in FIGS. 7B or 5, or may be attached by other common means such as compression beneath the enclosure 36. A fluid wick 34 having a resistive heating element 35 wrapped around it, is placed between the first heater contact plates 33, and attached thereto. A heater 36, comprising raised internal edges on the internal end (not shown), a thin mixing zone (not shown), and primary condensation channel covers 45a that slide over the rails 45b on the sides of the tank on the first half of the tank, creating a primary condensation channel / chamber 45. In addition, a small male snap feature 39b located at the end of the channel cover is configured fall into a female snap feature 39a, located mid-body on the side of the tank, creating a snap-fit assembly.

As will be further clarified below, the combination of the open-sided end 53, the protruding tips 33a of the contact plates 33, the fluid wick 34 having a resistive heating element 35, enclosed in the open end of the fluid storage tank, under the heater 36, with a thin mixing zone therein, creates an efficient heater system. In addition, the primary condensation channel covers 45a which slide over the rails 45b on the sides of the tank create an integrated, easily assembled, primary condensation chamber 45, all within the heater at the first end of the cartridge 30 or pod 30a.

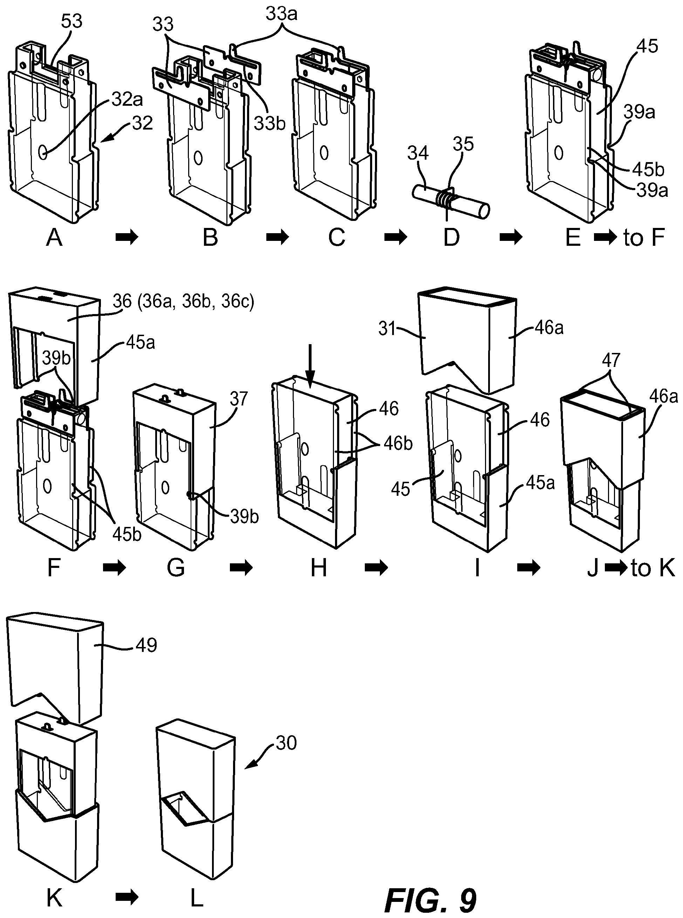

In some embodiments of the device, as illustrated in FIG. 9, the heater may encloses at least a first end of the cartridge. The enclosed first end of the cartridge may include the heater and the interior fluid storage compartment. In some embodiments, the heater further comprises at least one first condensation chamber 45.

FIG. 9 shows diagramed steps that mat be performed to assemble a cartomizer and/or mouthpiece. In A-B the fluid storage compartment 32a may be oriented such that the heater inlet 53 faces upward. The heater contacts 33 may be inserted into the fluid storage compartment. Flexible tabs 33a may be inserted into the heater contacts 33. In a step D the resistive heating element 35 may be wound on to the wick 34. In step E the wick 34 and resistive heating element 35 may be placed on the fluid storage compartment. One or more free ends of the heater may sit outside the heater contacts. The one or more free ends may be soldered in place, rested in a groove, or snapped into a fitted location. At least a fraction of the one or more free ends may be in communication with the heater contacts 33. In a step F the heater enclosure 36 may be snapped in place. The heater enclosure 36 may be fitted on the fluid storage compartment. Step G shows the heater enclosure 36 is in place on the fluid storage compartment. In step H the fluid storage compartment can be flipped over. In step I the mouthpiece 31 can be fitted on the fluid storage compartment. Step J shows the mouthpiece 31 in place on the fluid storage compartment. In step K an end 49 can be fitted on the fluid storage compartment opposite the mouthpiece. Step L shows a fully assembled cartridge 30. FIG. 7B shows an exploded view of the assembled cartridge 30.

Depending on the size of the heater and/or heater chamber, the heater may have more than one wick 34 and resistive heating element 35.

In some embodiments, the first pair of heater contacts 33 further comprises a formed shape that comprises a tab 33a having a flexible spring value that extends out of the heater. In some embodiments, the cartridge 30 comprises heater contacts 33 which are inserted into the cartridge receptacle 21 of the device body 20 wherein, the flexible tabs 33a insert into a second pair of heater contacts 22 to complete a circuit with the device body. The first pair of heater contacts 33 may be a heat sink that absorbs and dissipates excessive heat produced by the resistive heating element 35. The first pair of heater contacts 33 may be a heat shield that protects the heater chamber from excessive heat produced by the resistive heating element 35. The first pair of heater contacts may be press-fit to an attachment feature on the exterior wall of the first end of the cartridge. The heater 36 may enclose a first end of the cartridge and a first end of the fluid storage compartment 32a. The heater may comprise a first condensation chamber 45. The heater may comprise at least one additional condensation chamber 45, 45', 45", etc. The first condensation chamber may be formed along an exterior wall of the cartridge.

In still other embodiments of the device, the cartridge may further comprise a mouthpiece 31, wherein the mouthpiece comprises at least one aerosol outlet channel / secondary condensation chamber 46; and at least one aerosol outlet 47.The mouthpiece may be attached to a second end of the cartridge. The second end of the cartridge with the mouthpiece may be exposed when the cartridge is inserted in the device. The mouthpiece may comprise more than one second condensation chamber 46, 46', 46", etc. The second condensation chamber is formed along an exterior wall of the cartridge.

The mouthpiece 31 may enclose the second end of the cartridge and interior fluid storage compartment. The partially assembled (e.g., mouthpiece removed) unit may be inverted and filled with a vaporizable fluid through the opposite, remaining (second) open end. Once filled, a snap-on mouthpiece 31 that also closes and seals the second end of the tank is inserted over the end. It also comprises raised internal edges (not shown), and aerosol outlet channel covers 46a that may slide over the rails 46b located on the sides of the second half of the tank, creating aerosol outlet channels / secondary condensation chambers 46. The aerosol outlet channels / secondary condensation chambers 46 slide over the end of primary condensation chamber 45, at a transition area 57, to create a junction for the vapor leaving the primary chamber and proceed out through the aerosol outlets 47, at the end of the aerosol outlet channels 46 and user-end of the mouthpiece 31.

The cartridge may comprise a first condensation chamber and a second condensation chamber 45, 46. The cartridge may comprise more than one first condensation chamber and more than one second condensation chamber 45, 46, 45', 46', etc.

In some embodiments of the device, a first condensation chamber 45 may be formed along the outside of the cartridge fluid storage compartment 31. In some embodiments of the device an aerosol outlet 47 exists at the end of aerosol outlet chamber 46. In some embodiments of the device, a first and second condensation chamber 45, 46 may be formed along the outside of one side of the cartridge fluid storage compartment 31. In some embodiments the second condensation chamber may be an aerosol outlet chamber. In some embodiments another pair of first and/or second condensation chambers 45', 46' is formed along the outside of the cartridge fluid storage compartment 31 on another side of the device. In some embodiments another aerosol outlet 47' will also exist at the end of the second pair of condensation chambers 45', 46'.

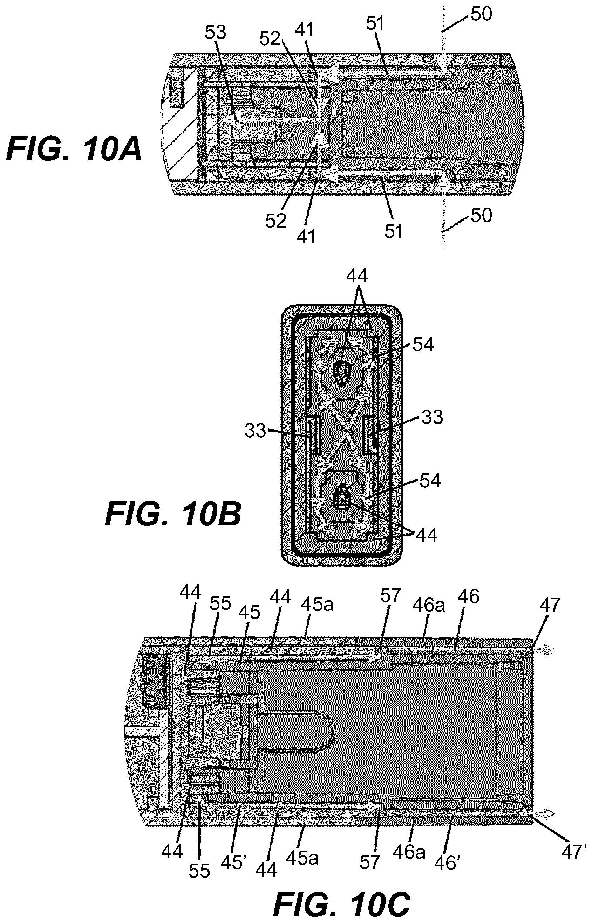

In any one of the embodiments, the first condensation chamber and the second condensation chamber may be in fluid communication as illustrated in FIG. 10C.

In some embodiments, the mouthpiece may comprise an aerosol outlet 47 in fluid communication with the second condensation chamber 46. The mouthpiece may comprise more than one aerosol outlet 47, 47' in fluid communication with more than one the second condensation chamber 46, 46'.The mouthpiece may enclose a second end of the cartridge and a second end of the fluid storage compartment.

In each of the embodiments described herein, the cartridge may comprise an airflow path comprising: an air inlet passage; a heater; at least a first condensation chamber; an aerosol outlet chamber, and an outlet port. In some of the embodiments described herein, the cartridge comprises an airflow path comprising: an air inlet passage; a heater; a first condensation chamber; a secondary condensation chamber; and an outlet port.

In still other embodiments described herein the cartridge may comprise an airflow path comprising at least one air inlet passage; a heater; at least one first condensation chamber; at least one secondary condensation chamber; and at least one outlet port.

As illustrated in FIGS. 10A-10C, an airflow path is created when the user draws on the mouthpiece 31 to create a suction (e.g., a puff), which essentially pulls air through the channel air inlet 50, through the air inlet passage 51, and into the heater chamber 37 through the second air passage (tank air inlet hole) 41 at the tank air inlet 52, then into the heater inlet 53. At this point, the pressure sensor has sensed the user's puff, and activated the circuit to the resistive heating element 35, which in turn, begins to generate vapor from the vapor fluid (e-juice). As air enters the heater inlet 53, it begins to mix and circulate in a narrow chamber above and around the wick 34 and between the heater contacts 33, generating heat, and dense, concentrated vapor as it mixes in the flow path 54 created by the sealing structure obstacles 44. FIG. 8A shows a detailed view of the sealing structure obstacles 44. Ultimately the vapor may be drawn, out of the heater along an air path 55 near the shoulder of the heater and into the primary condensation chamber 45 where the vapor expands and begins to cool. As the expanding vapor moves along the airflow path, it makes a transition from the primary condensation chamber 45 through a transition area 57, creating a junction for the vapor leaving the primary chamber, and entering the second vapor chamber 46, and proceeds out through the aerosol outlets 47, at the end of the mouthpiece 31 to the user.

As illustrated in FIGS. 10A-10C, the device may have a dual set of channel air inlets 50-53, dual first condensation chambers 55/45, dual second condensation chambers and aeration channels 57/46, and/or dual aerosol outlets 47.

Alternatively, the device may have an airflow path comprising: a channel air inlet 50, 51; a second air passage 41; a heater chamber 37; a first condensation chamber 45; a second condensation chamber 46; and/or an aerosol outlet 47.

In some cases, the devise may have an airflow path comprising: more than one air inlet passage; more than one second air passage; a heater chamber; more than one first condensation chamber; more than one second condensation chamber; and more than one aerosol outlet as clearly illustrated in FIGS. 10A-10C.

In any one of the embodiments described herein, the heater 36 may be in fluid communication with the internal fluid storage compartment 32a.

In each of the embodiments described herein, the fluid storage compartment 32 is in fluid communication with the heater chamber 37, wherein the fluid storage compartment is capable of retaining condensed aerosol fluid, as illustrated in FIGS. 10A, 10C and 14.

In some embodiments of the device, the condensed aerosol fluid may comprise a nicotine formulation. In some embodiments, the condensed aerosol fluid may comprise a humectant. In some embodiments, the humectant may comprise propylene glycol. In some embodiments, the humectant may comprise vegetable glycerin.

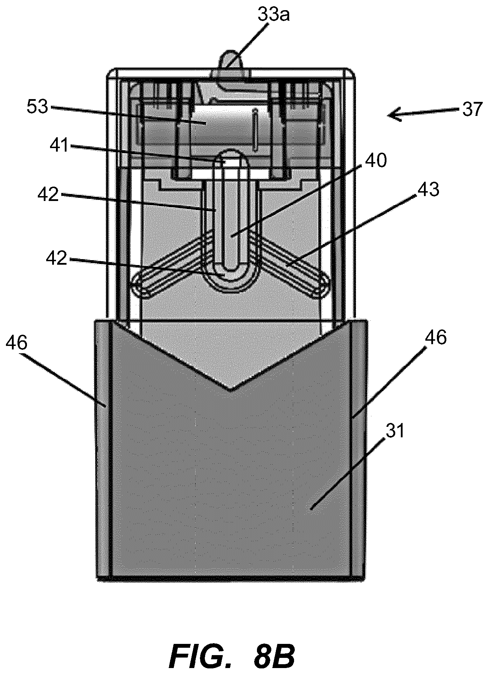

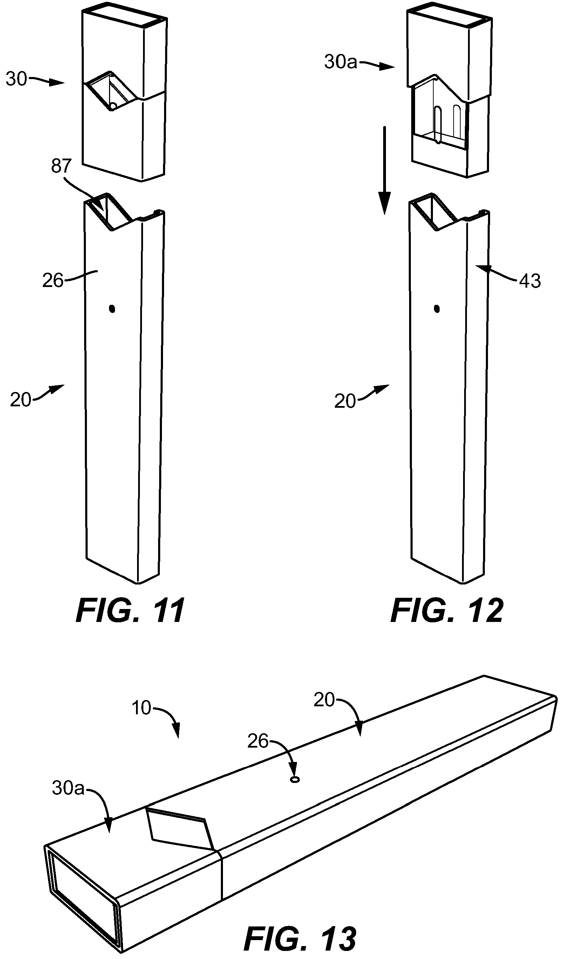

In some cases, the cartridge may be detachable from the device body. In some embodiments, the cartridge receptacle and the detachable cartridge may form a separable coupling. In some embodiments the separable coupling may comprise a friction assembly. As illustrated in FIGS. 11-14, the device may have a press-fit (friction) assembly between the cartridge pod 30a and the device receptacle. Additionally, a dent / friction capture such as 43 may be utilized to capture the pod 30a to the device receptacle or to hold a protective cap 38 on the pod, as further illustrated in FIG. 8B.

In other embodiments, the separable coupling may comprise a snap-fit or snap-lock assembly. In still other embodiments the separable coupling may comprise a magnetic assembly.

In any one of the embodiments described herein, the cartridge components may comprise a snap-fit or snap-lock assembly, as illustrated in FIG. 5. In any one of the embodiments, the cartridge components may be reusable, refillable, and/or recyclable. The design of these cartridge components lend themselves to the use of such recyclable plastic materials as polypropylene, for the majority of components.

In some embodiments of the device 10, the cartridge 30 may comprise: a fluid storage compartment 32; a heater 36 affixed to a first end with a snap-fit coupling 39a, 39b; and a mouthpiece 31 affixed to a second end with a snap-fit coupling 39c, 39d (not shown - but similar to 39a and 39b). The heater 36 may be in fluid communication with the fluid storage compartment 32. The fluid storage compartment may be capable of retaining condensed aerosol fluid. The condensed aerosol fluid may comprise a nicotine formulation. The condensed aerosol fluid may comprise a humectant. The humectant may comprise propylene glycol and / or vegetable glycerin.

Provided herein is a device for generating an inhalable aerosol comprising: a device body 20 comprising a cartridge receptacle 21 for receiving a cartridge 30; wherein an interior surface of the cartridge receptacle forms a first side of an air inlet passage 51 when a cartridge comprising a channel 40 integral to an exterior surface is inserted into the cartridge receptacle 21, and wherein the channel forms a second side of the air inlet passage 51.

Provided herein is a device for generating an inhalable aerosol comprising: a device body 20 comprising a cartridge receptacle 21 for receiving a cartridge 30; wherein the cartridge receptacle comprises a channel integral to an interior surface and forms a first side of an air inlet passage when a cartridge is inserted into the cartridge receptacle, and wherein an exterior surface of the cartridge forms a second side of the air inlet passage 51.

Provided herein is a cartridge 30 for a device for generating an inhalable aerosol 10 comprising: a fluid storage compartment 32; a channel 40 integral to an exterior surface, wherein the channel forms a first side of an air inlet passage 51; and wherein an internal surface of a cartridge receptacle 21 in the device forms a second side of the air inlet passage 51 when the cartridge is inserted into the cartridge receptacle.

Provided herein is a cartridge 30 for a device for generating an inhalable aerosol 10 comprising a fluid storage compartment 32, wherein an exterior surface of the cartridge forms a first side of an air inlet channel 51 when inserted into a device body 10 comprising a cartridge receptacle 21, and wherein the cartridge receptacle further comprises a channel integral to an interior surface, and wherein the channel forms a second side of the air inlet passage 51.

In some embodiments, the cartridge further comprises a second air passage 41 in fluid communication with the channel 40, wherein the second air passage 41 is formed through the material of the cartridge 32 from an exterior surface of the cartridge to the internal fluid storage compartment 32a.

In some embodiments of the device body cartridge receptacle 21 or the cartridge 30, the channel 40 comprises at least one of: a groove; a trough; a depression; a dent; a furrow; a trench; a crease; and a gutter.

In some embodiments of the device body cartridge receptacle 21 or the cartridge 30, the channel 40 comprises walls that are either recessed into the surface or protrude from the surface where it is formed.

In some embodiments of the device body cartridge receptacle 21 or the cartridge 30, the internal side walls of the channel 40 form additional sides of the air inlet passage 51.

Provided herein is a device for generating an inhalable aerosol comprising: a cartridge comprising; a fluid storage compartment; a heater affixed to a first end comprising; a first heater contact, a resistive heating element affixed to the first heater contact; a device body comprising; a cartridge receptacle for receiving the cartridge; a second heater contact adapted to receive the first heater contact and to complete a circuit; a power source connected to the second heater contact; a printed circuit board (PCB) connected to the power source and the second heater contact; wherein the PCB is configured to detect the absence of fluid based on the measured resistance of the resistive heating element, and turn off the device.

Referring now to FIGS. 13, 14, and 15, in some embodiments, the device body further comprises at least one: second heater contact 22 (best shown in FIG. 6C detail); a battery 23;; a printed circuit board 24; a pressure sensor 27; and an indicator light 26.

In some embodiments, the printed circuit board (PCB) further comprises: a microcontroller; switches; circuitry comprising a reference resister; and an algorithm comprising logic for control parameters; wherein the microcontroller cycles the switches at fixed intervals to measure the resistance of the resistive heating element relative to the reference resistor, and applies the algorithm control parameters to control the temperature of the resistive heating element.

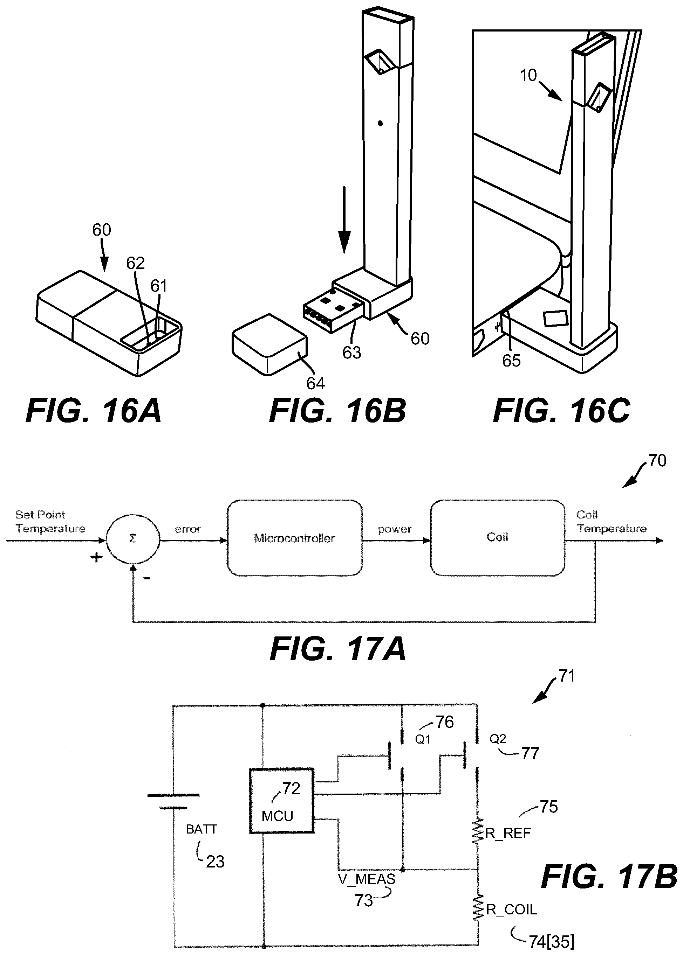

As illustrated in the basic block diagram of FIG. 17A, the device utilizes a proportional-integral-derivative controller or PID control law. A PID controller calculates an "error" value as the difference between a measured process variable and a desired SetPoint. When PID control is enabled, power to the coil is monitored to determine whether or not acceptable vaporization is occurring. With a given airflow over the coil, more power will be required to hold the coil at a given temperature if the device is producing vapor (heat is removed from the coil to form vapor). If power required to keep the coil at the set temperature drops below a threshold, the device indicates that it cannot currently produce vapor. Under normal operating conditions, this indicates that there is not enough liquid in the wick for normal vaporization to occur.

In some embodiments, the micro-controller instructs the device to turn itself off when the resistance exceeds the control parameter threshold indicating that the resistive heating element is dry.

In still other embodiments, the printed circuit board further comprises logic capable of detecting the presence of condensed aerosol fluid in the fluid storage compartment and is capable of turning off power to the heating contact(s) when the condensed aerosol fluid is not detected. When the microcontroller is running the PID temperature control algorithm 70, the difference between a set point and the coil temperature (error) is used to control power to the coil so that the coil quickly reaches the set point temperature, [between 200°C and 400°C]. When the over-temperature algorithm is used, power is constant until the coil reaches an over-temperature threshold, [between 200°C and 400°C]; (FIG. 17 A applies: set point temperature is over-temperature threshold; constant power until error reaches 0).

The essential components of the device used to control the resistive heating element coil temperature are further illustrated in the circuit diagram of FIG. 17B. Wherein, BATT 23 is the battery; MCU 72 is the microcontroller; Q1 (76) and Q2 (77) are P-channel MOSFETs (switches); R_COIL 74 is the resistance of the coil. R_REF 75 is a fixed reference resistor used to measure R_COIL 74 through a voltage divider 73.

The battery powers the microcontroller. The microcontroller turns on Q2 for 1 ms every 100ms so that the voltage between R_REF and R_COIL (a voltage divider) may be measured by the MCU at V_MEAS. When Q2 is off, the control law controls Q1 with PWM (pulse width modulation) to power the coil (battery discharges through Q1 and R_COIL when Q1 is on).

In some embodiments of the device, the device body further comprises at least one: second heater contact; a power switch; a pressure sensor; and an indicator light.

In some embodiments of the device body, the second heater contact 22 may comprise: a female receptacle; or a male contact, or both, a flexible contact; or copper alloy or another electrically conductive material.

In some embodiments of the device body, the battery supplies power to the second heater contact, pressure sensor, indicator light and the printed circuit board. In some embodiments, the battery is rechargeable. In some embodiments, the indicator light 26 indicates the status of the device and / or the battery or both.

In some embodiments of the device, the first heater contact and the second heater contact complete a circuit that allows current to flow through the heating contacts when the device body and detachable cartridge are assembled, which may be controlled by an on / off switch. Alternatively, the device can be turned on an off by a puff sensor. The puff sensor may comprise a capacitive membrane. The capacitive membrane may be similar to a capacitive membrane used in a microphone.

In some embodiments of the device, there is also an auxiliary charging unit for recharging the battery 23 in the device body. As illustrated in FIGS. 16A-16C, the charging unit 60, may comprise a USB device with a plug for a power source 63 and protective cap 64, with a cradle 61 for capturing the device body 20 (with or without the cartridge installed). The cradle may further comprise either a magnet or a magnetic contact 62 to securely hold the device body in place during charging. As illustrated in FIG. 6B, the device body further comprises a mating charging contact 28 and a magnet or magnetic contact 29 for the auxiliary charging unit. FIG. 16C is an illustrative example of the device 20 being charged in a power source 65 (laptop computer or tablet).

In some cases the microcontroller on the PCB may be configured to monitor the temperature of the heater such that the vaporizable material is heated to a prescribed temperature. The prescribed temperature may be an input provided by the user. A temperature sensor may be in communication with the microcontroller to provide an input temperature to the microcontroller for temperature regulation. A temperature sensor may be a thermistor, thermocouple, thermometer, or any other temperature sensors. In some cases, the heating element may simultaneously perform as both a heater and a temperature sensor. The heating element may differ from a thermistor by having a resistance with a relatively lower dependence on temperature. The heating element may comprise a resistance temperature detector.

The resistance of the heating element may be an input to the microcontroller. In some cases, the resistance may be determined by the microcontroller based on a measurement from a circuit with a resistor with at least one known resistance, for example, a Wheatstone bridge. Alternatively, the resistance of the heating element may be measured with a resistive voltage divider in contact with the heating element and a resistor with a known and substantially constant resistance. The measurement of the resistance of the heating element may be amplified by an amplifier. The amplifier may be a standard op amp or instrumentation amplifier. The amplified signal may be substantially free of noise. In some cases, a charge time for a voltage divider between the heating element and a capacitor may be determined to calculate the resistance of the heating element. In some cases, the microcontroller must deactivate the heating element during resistance measurements. The resistance of the heating element may be directly proportional to the temperature of the heating element such that the temperature may be directly determine from the resistance measurement. Determining the temperature directly from the heating element resistance measurement rather than from an additional temperature sensor may generate a more accurate measurement because unknown contact thermal resistance between the temperature sensor and the heating element is eliminated. Additionally, the temperature measurement may be determined directly and therefore faster and without a time lag associated with attaining equilibrium between the heating element and a temperature sensor in contact with the heating element.

Provided herein is a device for generating an inhalable aerosol comprising: a cartridge comprising a first heater contact; a device body comprising; a cartridge receptacle for receiving the cartridge; a second heater contact adapted to receive the first heater contact and to complete a circuit; a power source connected to the second heater contact; a printed circuit board (PCB) connected to the power source and the second heater contact; and a single button interface; wherein the PCB is configured with circuitry and an algorithm comprising logic for a child safety feature.

In some embodiments, the algorithm requires a code provided by the user to activate the device. In some embodiments; the code is entered by the user with the single button interface. In still further embodiments the single button interface is the also the power switch.

Provided herein is a cartridge 30 for a device 10 for generating an inhalable aerosol comprising: a fluid storage compartment 32; a heater 36 affixed to a first end comprising: a heater chamber 37, a first pair of heater contacts 33, a fluid wick 34, and a resistive heating element 35 in contact with the wick; wherein the first pair of heater contacts 33 comprise thin plates affixed about the sides of the heater chamber 37, and wherein the fluid wick 34 and resistive heating element 35 are suspended there between.

Depending on the size of the heater or heater chamber, the heater may have more than one wick 34, 34' and resistive heating element 35, 35'.

In some embodiments, the first pair of heater contacts further comprise a formed shape that comprises a tab 33a having a flexible spring value that extends out of the heater 36 to complete a circuit with the device body 20.

In some embodiments, the heater contacts 33 are configured to mate with a second pair of heater contacts 22 in a cartridge receptacle 21 of the device body 20 to complete a circuit.

In some embodiments, the first pair of heater contacts is also a heat sink that absorbs and dissipates excessive heat produced by the resistive heating element.

In some embodiments, the first pair of heater contacts is a heat shield that protects the heater chamber from excessive heat produced by the resistive heating element.

Provided herein is a cartridge 30 for a device for generating an inhalable aerosol 10 comprising: a heater 36 comprising; a heater chamber 37, a pair of thin plate heater contacts 33 therein, a fluid wick 34 positioned between the heater contacts 33, and a resistive heating element 35 in contact with the wick; wherein the heater contacts 33 each comprise a fixation site 33c wherein the resistive heating element 35 is tensioned there between.

As will be obvious to one skilled in the art after reviewing the assembly method illustrated in FIG. 9, the heater contacts 33 simply snap or rest on locator pins on either side of the air inlet 53 on the first end of the cartridge interior fluid storage compartment, creating a spacious vaporization chamber containing the at least one wick 34 and at least one heating element 35.

Provided herein is a cartridge 30 for a device for generating an inhalable aerosol 10 comprising a heater 36 attached to a first end of the cartridge.

In some embodiments, the heater encloses a first end of the cartridge and a first end of the fluid storage compartment 32, 32a.

In some embodiments, the heater comprises a first condensation chamber 45.

In some embodiments, the heater comprises more than one first condensation chamber 45, 45'.

In some embodiments, the condensation chamber is formed along an exterior wall of the cartridge 45b.

As noted previously, and described in FIGS. 10A, 10B and 10C, the airflow path through the heater and heater chamber generates vapor within the heater circulating air path 54, which then exits through the heater exits 55 into a first (primary) condensation chamber 45, which is formed by components of the tank body comprising the primary condensation channel/chamber rails 45b, the primary condensation channel cover 45a, (the outer side wall of the heater enclosure).

Provided herein is a cartridge 30 for a device for generating an inhalable aerosol 10 comprising a fluid storage compartment 32 and a mouthpiece 31, wherein the mouthpiece is attached to a second end of the cartridge and further comprises at least one aerosol outlet 47.

In some embodiments, the mouthpiece 31 encloses a second end of the cartridge 30 and a second end of the fluid storage compartment 32, 32a.

Additionally, as clearly illustrated in FIG. 10C in some embodiments the mouthpiece also contains a second condensation chamber 46 prior to the aerosol outlet 47, which is formed by components of the tank body comprising the secondary condensation channel/chamber rails 46b, the second condensation channel cover 46a, (the outer side wall of the mouthpiece). Still further, the mouthpiece may contain yet another aerosol outlet 47' and another (second) condensation chamber 46' prior to the aerosol outlet, on another side of the cartridge.

In other embodiments, the mouthpiece comprises more than one second condensation chamber 46, 46'.

In some preferred embodiments, the second condensation chamber is formed along an exterior wall of the cartridge 46b.

In each of the embodiments described herein, the cartridge 30 comprises an airflow path comprising: a channel 40, 41, 42; a heater chamber 37; at least a first condensation chamber 45; and an aerosol outlet 47. In some of the embodiments described herein, the cartridge 30 comprises an airflow path comprising: an air inlet channel and passage 40, 41, 42; a heater chamber 37; a first condensation chamber 45; a second condensation chamber 46; and an aerosol outlet 47.

In still other embodiments described herein the cartridge 30 may comprise an airflow path comprising at least one channel 40, 41, 42; a heater chamber 37; at least one first condensation chamber 45; at least one second condensation chamber 46; and at least one aerosol outlet 47.

In each of the embodiments described herein, the fluid storage compartment 32 is in fluid communication with the heater 36, wherein the fluid storage compartment is capable of retaining condensed aerosol fluid.

In some embodiments of the device, the condensed aerosol fluid comprises a nicotine formulation. In some embodiments, the condensed aerosol fluid comprises a humectant. In some embodiments, the humectant comprises propylene glycol. In some embodiments, the humectant comprises vegetable glycerin.

Provided herein is a cartridge 30 for a device for generating an inhalable aerosol 10 comprising: a fluid storage compartment 32; a heater 36 affixed to a first end; and a mouthpiece 31 affixed to a second end; wherein the heater comprises a first condensation chamber 45 and the mouthpiece comprises a second condensation chamber 46.

In some embodiments, the heater comprises more than one first condensation chamber 45, 45' and the mouthpiece comprises more than one second condensation chamber 46, 46'.

In some embodiments, the first condensation chamber and the second condensation chamber are in fluid communication. As illustrated in FIG. 10C, the first and second condensation chambers have a common transition area 57, 57', for fluid communication.

In some embodiments, the mouthpiece comprises an aerosol outlet 47 in fluid communication with the second condensation chamber 46.

In some embodiments, the mouthpiece comprises two or more aerosol outlets 47, 47'.

In some embodiments, the mouthpiece comprises two or more aerosol outlets 47, 47' in fluid communication with the two or more second condensation chambers 46, 46'.

In any one of the embodiments, the cartridge meets ISO recycling standards.

In any one of the embodiments, the cartridge meets ISO recycling standards for plastic waste.

And in still other embodiments, the plastic components of the cartridge are composed of polylactic acid (PLA), wherein the PLA components are compostable and or degradable.

Provided herein is a device for generating an inhalable aerosol 10 comprising a device body 20 comprising a cartridge receptacle 21; and a detachable cartridge 30; wherein the cartridge receptacle and the detachable cartridge form a separable coupling, and wherein the separable coupling comprises a friction assembly, a snap-fit assembly or a magnetic assembly.

In other embodiments of the device, the cartridge is a detachable assembly. In any one of the embodiments described herein, the cartridge components may comprise a snap-lock assembly such as illustrated by snap features 39a and 39b. In any one of the embodiments, the cartridge components are recyclable.

Provided herein is a method of fabricating a device for generating an inhalable aerosol comprising: providing a device body comprising a cartridge receptacle; and providing a detachable cartridge; wherein the cartridge receptacle and the detachable cartridge form a separable coupling comprising a friction assembly, a snap-fit assembly or a magnetic assembly when the cartridge is inserted into the cartridge receptacle.

Provided herein is a method of making a device 10 for generating an inhalable aerosol comprising: providing a device body 20 with a cartridge receptacle 21 comprising one or more interior coupling surfaces 21a, 21b, 21c...; and further providing a cartridge 30 comprising: one or more exterior coupling surfaces 36a, 36b, 36c,..., a second end and a first end; a fluid storage compartment 32 comprising an interior fluid storage compartment 32a; at least one channel 40 on at least one exterior coupling surface, wherein the at least one channel forms one side of at least one air inlet passage 51, and wherein at least one interior wall of the cartridge receptacle forms at least one side one side of at least one air inlet passage 51when the detachable cartridge is inserted into the cartridge receptacle.

FIG. 9 provides an illustrative example of a method of assembling such a device.

In some embodiments of the method, the cartridge 30 is assembled with a [protective] removable end cap 38 to protect the exposed heater contact tabs 33a protruding from the heater 36.

Provided herein is a method of fabricating a cartridge for a device for generating an inhalable aerosol comprising: providing a fluid storage compartment; affixing a heater to a first end with a snap-fit coupling; and affixing a mouthpiece to a second end with a snap-fit coupling.

Provided herein is a cartridge 30 for a device for generating an inhalable aerosol 10 with an airflow path comprising: a channel air inlet 50 comprising a portion of an air inlet passage 51; a second air passage 41 in fluid communication with the channel; a heater chamber 37 in fluid communication with the second air passage; a first condensation chamber 45 in fluid communication with the heater chamber; a second condensation chamber 46 in fluid communication with the first condensation chamber; and an aerosol outlet 47 in fluid communication with second condensation chamber.

Provided herein is a device 10 for generating an inhalable aerosol adapted to receive a removable cartridge 30, wherein the cartridge comprises a fluid storage compartment [or tank] 32; an air inlet 41; a heater 36, a [protective] removable end cap 38, and a mouthpiece 31.

### Charging

In some cases, the vaporization device may comprise a power source. The power source may be configured to provide power to a control system, one or more heating elements, one or more sensors, one or more lights, one or more indicators, and/or any other system on the electronic cigarette that requires a power source. The power source may be an energy storage device. The power source may be a battery or a capacitor. In some cases, the power source may be a rechargeable battery.

The battery may be contained within a housing of the device. In some cases the battery may be removed from the housing for charging. Alternatively, the battery may remain in the housing while the battery is being charged. Two or more charge contact may be provided on an exterior surface of the device housing. The two or more charge contacts may be in electrical communication with the battery such that the battery may be charged by applying a charging source to the two or more charge contacts without removing the battery from the housing.

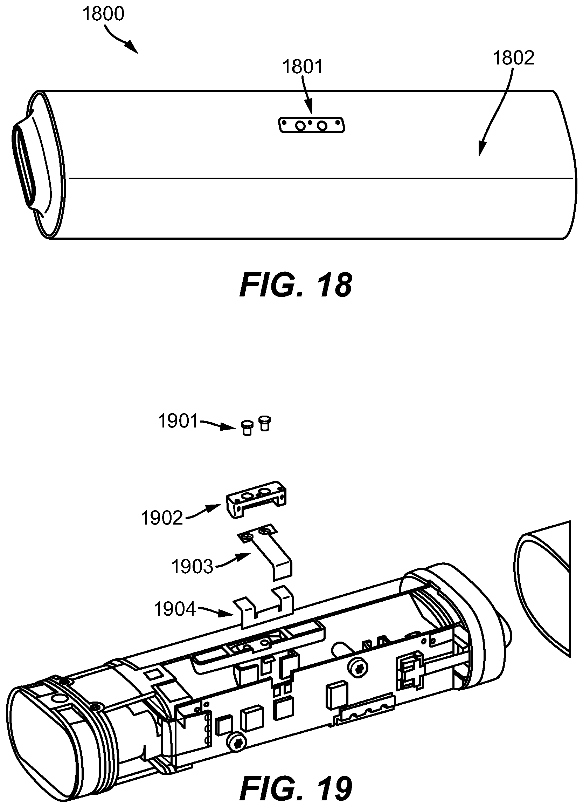

FIG. 18 shows a device 1800 with charge contacts 1801. The charge contacts 1801 may be accessible from an exterior surface of a device housing 1802. The charge contacts 1801 may be in electrical communication with an energy storage device (e.g., battery) inside of the device housing 1802. In some cases, the device housing may not comprise an opening through which the user may access components in the device housing. The user may not be able to remove the battery and/or other energy storage device from the housing. In order to open the device housing a user must destroy or permanently disengage the charge contacts. In some cases, the device may fail to function after a user breaks open the housing.

FIG. 19 shows an exploded view of a charging assembly 1900 in an electronic vaporization device. The housing (not shown) has been removed from the exploded view in FIG. 19. The charge contact pins 1901 may be visible on the exterior of the housing. The charge contact pins 1901 may be in electrical communication with a power storage device of the electronic vaporization device. When the device is connected to a power source (e.g., during charging of the device) the charging pins may facilitate electrical communication between the power storage device inside of the electronic vaporization device and the power source outside of the housing of the vaporization device. The charge contact pins 1901 may be held in place by a retaining bezel 1902. The charge contact pins 1901 may be in electrical communication with a charger flex 1903. The charging pins may contact the charger flex such that a need for soldering of the charger pins to an electrical connection to be in electrical communication with the power source may be eliminated. The charger flex may be soldered to a printed circuit board (PCB). The charger flex may be in electrical communication with the power storage device through the PCB. The charger flex may be held in place by a bent spring retainer 1904.

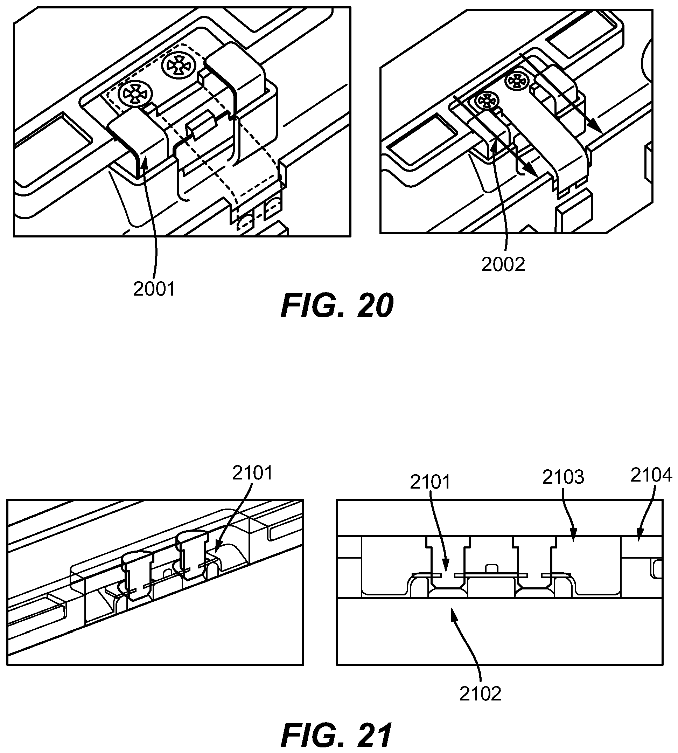

FIG. 20 shows the bent spring retainer in an initial position 2001 and a deflected position 2002. The bent spring retainer may hold the retaining bezel in a fixed location. The bent spring retainer may deflect only in one direction when the charging assembly is enclosed in the housing of the electronic vaporization device.

FIG. 21 shows a location of the charger pins 2101 when the electronic vaporization device is fully assembled with the charging pins 2101 contact the charging flex 2102. When the device is fully assembled at least a portion of the retaining bezel may be fitted in an indentation 2103 on the inside of the housing 2104. In some cases, disassembling the electronic vaporization device may destroy the bezel such that the device cannot be reassembled after disassembly.

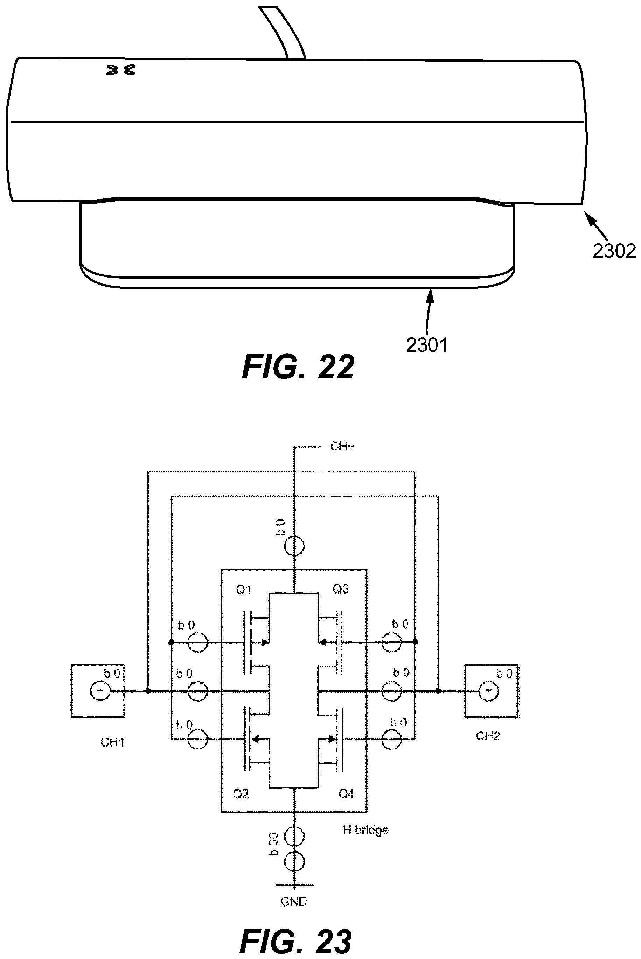

A user may place the electronic smoking device in a charging cradle. The charging cradle may be a holder with charging contact configured to mate or couple with the charging pins on the electronic smoking device to provide charge to the energy storage device in the electronic vaporization device from a power source (e.g., wall outlet, generator, and/or external power storage device). FIG. 22 shows a device 2302 in a charging cradle 2301. The charging cable may be connected to a wall outlet, USB, or any other power source. The charging pins (not shown) on the device 2302 may be connected to charging contacts (not shown) on the charging cradle 2301. The device may be configured such that when the device is placed in the cradle for charging a first charging pin on the device may contact a first charging contact on the charging cradle and a second charging pin on the device may contact a second charging contact on the charging cradle or the first charging pin on the device may contact a second charging contact on the charging cradle and the second charging pin on the device may contact the first charging contact on the charging cradle. The charging pins on the device and the charging contacts on the cradle may be in contact in any orientation. The charging pins on the device and the charging contacts on the cradle may be agnostic as to whether they are current inlets or outlets. Each of the charging pins on the device and the charging contacts on the cradle may be negative or positive. The charging pins on the device may be reversible.

FIG. 23 shows a circuit 2400 that may permit the charging pins on the device to be reversible. The circuit 2400 may be provided on a PCB in electrical communication with the charging pins. The circuit 2400 may comprise a metal-oxide-semiconductor field-effect transistor (MOSFET) H bridge. The MOSFET H bridge may rectify a change in voltage across the charging pins when the charging pins are reversed from a first configuration where in a first configuration the device is placed in the cradle for charging with the first charging pin on the device in contact with the first charging contact on the charging cradle to a second charging pin on the device in contact with the second charging contact on the charging cradle to a second configuration where the first charging pin on the device is in contact with the second charging contact on the charging cradle and the second charging pin on the device is in contact with the first charging contact on the charging cradle. The MOSFET H bridge may rectify the change in voltage with an efficient current path.

As shown in FIG. 23 the MOSFET H bridge may comprise two or more n-channel MOSFETs and two or more p-channel MOSFETs. The n-channel and p-channel MOSFETs may be arranged in an H bridge. Sources of p-channels MOSFETs (Q1 and Q3) may be in electrical communication. Similarly, sources of n-channel FETs (Q2 and Q4) may be in electrical communication. Drains of pairs of n and p MOSFETs (Q1 with Q2 and Q3 with Q4) may be in electrical communication. TA common drain from one n and p pair may be in electrical communication with one or more gates of the other n and p pair and/or vice versa. Charge contacts (CH1 and CH2) may be in electrical communication to common drains separately. A common source of the n MOSFETs may be in electrical communication to PCB ground (GND). The common source of the p MOSFETs may be in electrical communication with the PCB's charge controller input voltage (CH+). When CH1 voltage is greater than CH2 voltage by the MOSFET gate threshold voltages, Q1 and Q4 may be "on," connecting CH1 to CH+ and CH2 to GND. When CH2 voltage is greater than CH1 voltage by the FET gate threshold voltages, Q2 and Q3 may be "on," connecting CH1 to GND and CH2 to CH+. For example, whether there is 9V or -9V across CH1 to CH2, CH+ will be 9V above GND. Alternatively, a diode bridge could be used, however the MOSFET bridge may be more efficient compared to the diode bridge.

In some cases the charging cradle may be configured to be a smart charger. The smart charger may put the battery of the device in series with a USB input to charge the device at a higher current compared to a typical charging current. In some cases, the device may charge at a rate up to about 2 amps (A), 4A, 5A, 6A, 7A, 10A, or 15A. In some cases, the smart charger may comprise a battery, power from the battery may be used to charge the device battery. When the battery in the smart charger has a charge below a predetermined threshold charge, the smart charger may simultaneously charge the battery in the smart charger and the battery in the device.

### Blow discrimination

In the devices and vaporizers described herein, a pressure sensor is used and configured to detect blowing and to distinguish blowing from draw (sucking/inhaling). For example, a modified electret microphone may be used as a pressure sensor connected to the device's microcontroller so that pressure-dependent measurements can be made by the microcontroller. The microcontroller's draw detection algorithm, which uses measurements of pressure sensor's capacitance to determine the start and end of the draw, may be configured to include blow detection and/or blow discrimination.

As mentioned above, other types of pressures sensors may be used (e.g., MEMS pressure sensors or any other differential pressure sensor). In such cases the output of the sensor (which may be converted by the sensor and/or associated circuitry into a pressure value (e.g., in mmHg, atm, etc.) or it may be a raw sensor output or value (e.g., reading) such as a capacitance value in the case of a pressure sensor using a capacitive membrane, electrical value (resistive, voltage, etc.), digital value, force and/or displacement value, etc. As described herein, this raw value may be used in the controls described (e.g., microcontrollers) without requiring conversion to an actual pressure reading. Although the examples described herein refer to a capacitive pressure sensor having a capacitive membrane (e.g., an electret microphone), any other differential pressure sensor may be used instead with the methods and apparatuses described herein, including controlling the baseline during a putative blow and/or draw through the mouthpiece as described in greater detail below.

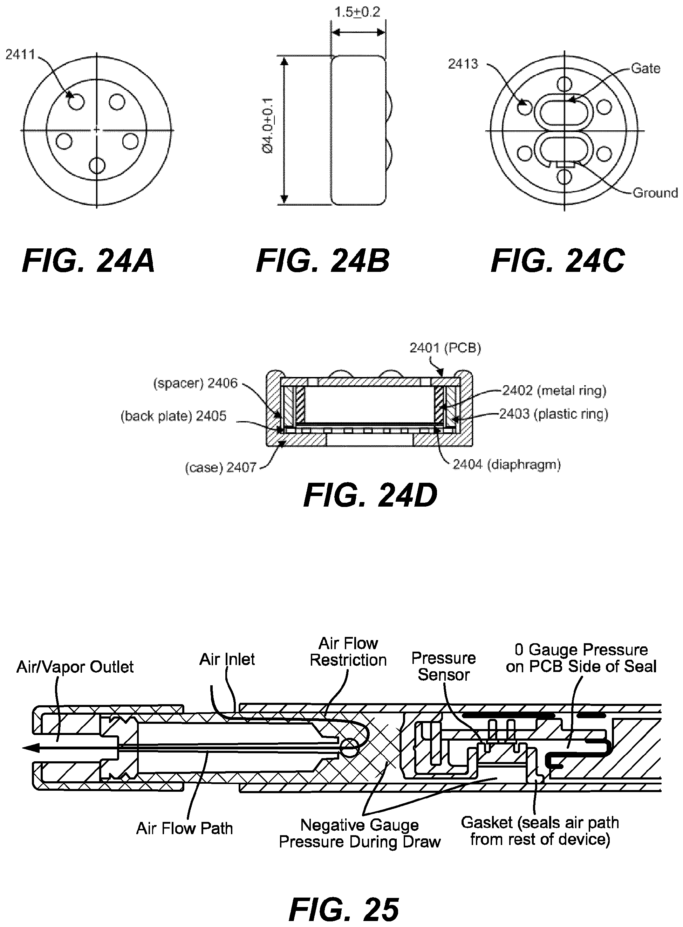

Thus, any pressure sensor that can distinguish positive and negative pressure may be used. For example a pressure sensor may comprise an electrically conductive diaphragm held in close proximity to a conductive static plate, forming an air capacitor, with both conductors connected to pins or pads on a circuit (e.g., PCB) opposite the static plate side of the sensor. FIGS. 24A-24D illustrate one example of a pressure sensor that is a capacitive pressure sensor. In this example, the diaphragm 2404 (shown in FIG. 24D) is mounted to a rigid thin wall tube (case 2403) that is a close fit within the outer conductive case 2407 of the sensor such that air cannot flow through the sensor around the diaphragm. Holes 2411 in the static plate on one side of a gasket and holes 2413 in the PCB 2401 on the opposite side of the diaphragm allow pressure differences between the two sides of the sensor to been seen by the diaphragm, which deflects with a pressure difference across it.

Within the vaporizer, the sensor may be included in a sealed air path so as to distinguish a difference between internal pressure and air pressure. In some variations, a gasket 2502 in the device forms an air-tight seal around the sensor's case such that the static plate side of the sensor sees gauge pressures in the device's air path when a user draws from or blows into the device, as shown in FIG. 25. Air flow restriction between the device's nominal air inlet 2505 and the pressure sensor 2509 creates a pressure that the static plate side of the pressure registers. The PCB 2511 side of the pressure sensor stays at an external reference (e.g., 0 gauge) pressure during a draw or blow as the PCB side of the pressure sensor is not part of the air path and is not sealed from ambient air. Pressure difference on either side of the sensor resolve onto either side of the diaphragm; negative gauge pressure in the air path from a draw pulls the diaphragm towards the static plate, increasing the capacitance of the sensor, while positive gauge pressures in the air path from a blow push the diaphragm away from the static plate, decreasing the sensor's capacitance.

Differences between the pressure on either side of the diaphragm 2404 and the back plate 2404 change the spacing between the diaphragm and back plate and therefore the capacitance of the sensor. This different separation may be read as the capacitance of the sensor and compared to ambient. In some variations, capacitance is measured with an oscillating circuit that sources and sinks current to/from the sensor to charge and discharge the sensor repeatedly. The device's microcontroller counts the number of times the sensor's intrinsic capacitor is charged and discharged within a fixed time period (e.g., 0.5 ms, 1 ms, 1.5 ms, 2 ms, etc.) and uses this value in a draw detection algorithm. This measurement may be inversely related to the capacitance of the sensor, since an increase in capacitance will make the capacitor charge slower, resulting in fewer charge and discharge cycles during the measurement period. So an increase in capacitance from negative air path gauge pressure, normally a draw, will result in a lower reading than when the user is not drawing from the device. Blowing into the nominal outlet of the air path will result in an increase in this measured value. Actual capacitance and air path gauge pressure are not needed by the draw detection algorithm, so they are not calculated, though they could be approximated and used in a similar draw detection algorithm.

In any of the apparatuses described herein, a capacitive sensing module within the microcontroller may handle the oscillation and current sourcing/sinking needed for the measurement via a direct connection to the pressure sensor diaphragm. The pressure sensor's case may be tied to PCB ground.

Because the ambient pressure around the device may change, the 'baseline' capacitance of the sensor may also change. This may be incorporated into the control circuitry that determines draw (and may determine or reject blow). For example, the draw detection algorithm may respond to environmental changes (not including draw or blow) that may change the nominal pressure measurement by using a baseline pressure measurement value which normally follows live pressure measurements using a software low-pass filter. With a moving baseline, a threshold for detecting the start of a draw can be kept very close to the baseline and live readings for consistent sensitivity and maximum sensitivity without falsely detected draws. The draw detection algorithm may therefore detect the start of a draw when the live pressure measurement drops (indicating a pressure drop in the air path) to some threshold below the baseline value for some number of measurements. The algorithm detects end of draw when live pressure measurements rise above some threshold below the baseline. The baseline may be fixed during the draw so that end of draw detection does not happen prematurely, and so that subsequent draws don't require larger pressure drops for the algorithm to detect the start of a draw.

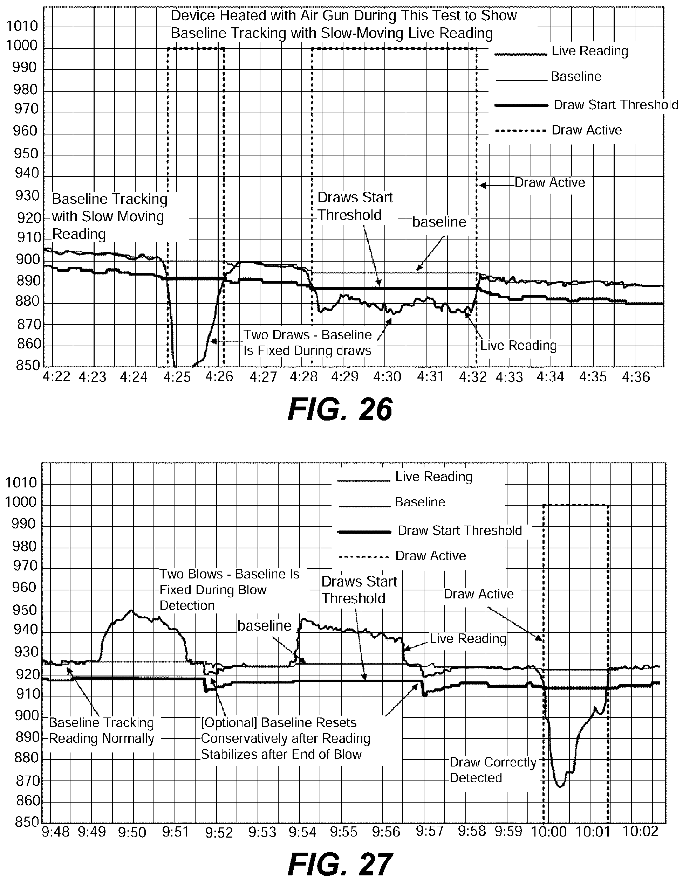

For example, see FIG. 26, which graphically illustrates the output of the pressure sensor over time and when draws are detected by the microcontroller (which is performing the control logic as described herein). In this example, the live reading is the pressure output (converted capacitance measurement in this example) from the sensor. The baseline is a low-pass filtered measure of the live reading. This baseline is fixed during the two draw events. Draw detection state is shown by the square wave, where the high state corresponds to a draw currently being detected. A first threshold is positioned at a fixed offset below the baseline; when the live reading from the sensor (the pressure measurement) crosses the threshold (e.g., exceeds this offset), it detects a draw event, and can again detect the end of the draw event when the pressure returns past the same threshold. These two thresholds may differ from each other in the draw detection logic (algorithm). A similar method may be applied to detect blowing; a second threshold or second offset (blow threshold/offset) maybe represented as a line on the opposite side of the baseline from the draw threshold/offset. In this example, draws are detected as downward pressure deflection and offset, whereas blowing is upward deflection relative to the baseline; if the orientation of the sensor is reversed, or if the raw sensor values, depending on the type of sensor, are used, the direction of blow and draw relative to the baseline may be different.

Blowing into the device may be detected and/or ignored using this algorithm. For example, when the live pressure measurement rises to values above the baseline value (e.g., in the more positive direction in the configuration shown in FIGS. 25, 26 and 27), which is usually caused by the user blowing into the air path outlet, the baseline may also stop following the live pressure measurements (e.g., remain at the last value) until the sensor output returns to below some threshold above the baseline value, as shown in FIG. 27. Holding the baseline during a blowing event may prevent the baseline from rising to a value at which draw start would be detected at the end of the blow. With this feature, users can hold the device with their lips and/or teeth without worrying about the device heating when they didn't intend for it to heat. Without this feature, it the device may apparently heat on its own. Thus, preventing false draw may save, battery life and vaporizable material by preventing detection of false draws which may occur, for example if the baseline during a blow event were reset to higher values so that the end of the blow would drop the sensor signal to beyond the threshold (which is an offset of the now-incorrect baseline) for detecting draw.

Thus, in general, the pressure sensor is configured to detect draw by comparing the instantaneous sensor output ("live reading" in FIGS. 26 and 27) to a baseline value which is a based on a filtered (e.g., low pass filtered, averaged, windowed, weighted averaged, etc.) version of the instantaneous sensor output. Detection of draw is made more accurate by rejecting changes to the baseline during blowing (e.g., "blow rejection" or "blow discrimination"). This may be achieved by freezing the value of the baseline when the instantaneous sensor output is greater than the baseline or greater than some predetermined offset above or below (whichever direction corresponds to blowing based on the orientation of the sensor in the system) the baseline. The baseline value may also be frozen when the instantaneous sensor crosses a threshold for detection of draw (e.g., above or below this threshold based on the orientation of the sensor in the system).

In an alternative embodiment, an oscillating circuit external to the microcontroller may be used to charge and discharge the pressure sensor's intrinsic capacitor. This circuit could be a multivibrator circuit, relaxation oscillator, or other oscillator that is self-resonant or excited by the microcontroller. The pressure sensor case may not be grounded. A microcontroller is still used to count charge and discharge cycles within a fixed interval.

In an alternative embodiment, a fixed resistance may be used to charge the pressure sensor's intrinsic capacitor. Charge time up to some voltage or discharge time down to some voltage is measured using a comparator internal or external to the microcontroller. In this case, readings will increase with increased sensor capacitance, as opposed to oscillator charge count readings which decrease with increased sensor capacitance, and the draw detection algorithm may be modified accordingly, with increased readings required for draw start detection and decreased readings required for blow detection.

In an alternative embodiment, the diaphragm is in between the static plate and the air path, such that negative pressure from a draw would decrease the capacitance of the sensor. If the sensor is still measured with an oscillator, the sensor output for reading deviations from baseline required for draw start detection and blow detection are switched.

In an alternative embodiment, the pressure sensor has solder pads and/or lead wires instead of pins on its PCB.

In an alternative embodiment, the draw detection circuitry (e.g., algorithm) may not detect a draw start unless it has a "stable" baseline. When a blow is detected, a flag may be set that indicates that the baseline is not stable. When the end of blow is detected and pressure readings stabilize, the baseline is set conservatively below live pressure readings and the flag for unstable baseline is cleared, meaning drops in the reading will again be detected as draw start event, similar to what is shown in FIG. 27.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

## Claims

1. A vaporizer device body (101, 201, 301, 401) comprising:
a cartridge receptacle (21) configured to insertably receive a cartridge (30, 30a) containing a vaporizable material;
a pressure sensor (27, 2509) configured to output instantaneous sensor readings, wherein a first side of the pressure sensor (27, 2509) is exposed to a first air path and a second side of the pressure sensor (27, 2509) is exposed to a second air path open to ambient pressure, the first air flow path comprising a channel formed between an interior surface of the cartridge receptacle (21) and an exterior surface of the cartridge (30, 30a), wherein the first air path passes from an air inlet, through the channel and to a heater and an outlet of a mouthpiece (31, 102, 202, 302) within the cartridge (30, 30a);
**characterized in that**
the vaporizer device body (101, 201, 301, 401) further comprises
a gasket (2502) around the pressure sensor (27, 2509),
a microcontroller configured to perform operations comprising:
determining a baseline based on filtering the instantaneous sensor readings as the instantaneous sensor readings are output by the pressure sensor (27, 2509);
holding the baseline constant at a prior value while the instantaneous sensor readings output by the pressure sensor (27, 2509) are above the baseline by a first threshold or below the baseline by a second threshold, the first threshold and the second threshold respectively indicating blowing or suction is being applied to the mouthpiece (31, 102, 202, 302); and
comparing the instantaneous sensor readings to the baseline and activating the heater to generate an aerosol from the vaporizable material when the instantaneous sensor readings output by the pressure sensor (27, 2509) are offset from the baseline by more than a third threshold, the third threshold indicating suction is being applied to the mouthpiece (31, 102, 202, 302).

2. The vaporizer device body (101, 201, 301, 401) of claim 1, wherein the gasket (2502) is configured to seal the second air path from the first air path.

3. The vaporizer device body (101, 201, 301, 401) of claim 1 or 2, wherein the pressure sensor (27, 2509) comprises a capacitive membrane, a MEMS pressure sensor, or a force collector type pressure sensor.

4. The vaporizer device body (101, 201, 301, 401) of any of the preceding claims, wherein the instantaneous sensor readings output by the pressure sensor (27, 2509) comprise at least one of the following: capacitance values, unconverted sensor readings, or pressure values.

5. The vaporizer device body (101, 201, 301, 401) of claim 1, wherein the third threshold is the same as the second threshold, or wherein the third threshold is the same as the first threshold, or wherein the first threshold is zero, or wherein the second threshold is zero.

6. The vaporizer device body (101, 201, 301, 401) of any of claims 1 to 5, wherein the microcontroller is further configured to perform operations comprising at least one of:
tracking the baseline based on filtering the instantaneous sensor readings via low pass filtering of the instantaneous sensor readings;
tracking the baseline based on filtering the instantaneous sensor readings via output by taking a running average of the instantaneous sensor readings;stopping activating of the heater to generate vapor when the instantaneous sensor readings are offset from the baseline by less than the third threshold.

7. A vaporizer device (10, 100, 200, 300, 400) comprising:
a removable cartridge, and
a body (101, 201, 301, 401) comprising:
a cartridge receptacle (21) configured to receive the removable cartridge (30, 30a), and
a pressure sensor (27, 2509) configured to output instantaneous sensor readings,
wherein the removable cartridge (30, 30a) comprises a fluid storage compartment (32, 32a), a heater chamber (37), a mouthpiece (31, 102, 202, 302), a channel integral to an exterior surface of the cartridge and an air inlet passage formed by the channel and an internal surface of the cartridge receptacle when the cartridge is inserted into the cartridge receptacle, wherein the channel forms a first side of the air inlet passage, and an internal surface of the cartridge receptacle forms a second side of the air inlet passage, and
wherein a first air path passes from an channel air inlet opening (50), through the air inlet passage (51) formed by the channel, into the heater chamber (37) and through an outlet (47) of the mouthpiece (31, 102, 202, 302);
wherein a first side of the pressure sensor (27, 2509) is exposed to the first air path and a second side of the pressure sensor (27, 2509) is exposed to a second air path open to ambient pressure, **characterized in that**
the vaporizer device (10, 100, 200, 300, 400) further comprises:
a microcontroller configured to perform operations comprising:
determining a baseline based on filtering the instantaneous sensor readings as the instantaneous sensor readings are output by the pressure sensor (27, 2509);
holding the baseline constant at a prior value while the instantaneous sensor readings output by the pressure sensor (27, 2509) are above the baseline by a first threshold or below the baseline by a second threshold, the first threshold and the second threshold respectively indicating blowing or suction is being applied to the mouthpiece (31, 102, 202, 302); and
comparing the instantaneous sensor readings to the baseline and activating the heater to generate an aerosol from the vaporizable material when the instantaneous sensor readings output by the pressure sensor (27, 2509) are offset from the baseline by more than a third threshold, the third threshold indicating suction is being applied to the mouthpiece (31, 102, 202, 302).

8. The vaporizer device (10, 100, 200, 300, 400) according to claim 7, wherein the second air path is sealed from the first air path by a gasket (2502) around the pressure sensor (27, 2509).

9. The vaporizer device (10, 100, 200, 300, 400) of claim 7 or 8, wherein the pressure sensor (27, 2509) comprises a capacitive membrane, a MEMS pressure sensor, or a force collector type pressure sensor.

10. The vaporizer device (10, 100, 200, 300, 400) of any of claims 7 to 9, wherein the instantaneous sensor readings output by the pressure sensor (27, 2509) comprise at least one of the following: capacitance values, unconverted sensor readings, or pressure values.

11. The vaporizer device (10, 100, 200, 300, 400) of claim 7, wherein the third threshold is the same as the second threshold, or wherein the third threshold is the same as the first threshold, or wherein the first threshold is zero, or wherein the second threshold is zero.

12. The vaporizer device (10, 100, 200, 300, 400) of any of claims 7 to 8, wherein the microcontroller is further configured to perform operations comprising at least one of:
tracking the baseline based on filtering the instantaneous sensor readings via low pass filtering of the instantaneous sensor readings;
tracking the baseline based on filtering the instantaneous sensor readings via output by taking a running average of the instantaneous sensor readings;
stopping activating of the heater to generate vapor when the instantaneous sensor readings are offset from the baseline by less than the third threshold.

## Patentansprüche

1. Verdampfungsvorrichtungskörper (101, 201, 301, 401) umfassend:
eine Kartuschenaufnahme (21), die dazu eingerichtet ist, eine ein verdampfbares Material enthaltende Kartusche (30, 30a) einsetzbar aufzunehmen;
einen Drucksensor (27, 2509), der dazu eingerichtet ist, momentane Sensormesswerte auszugeben, wobei eine erste Seite des Drucksensors (27, 2509) einem ersten Luftpfad ausgesetzt ist und eine zweite Seite des Drucksensors (27, 2509) einem zweiten Luftpfad ausgesetzt ist, der mit Umgebungsdruck im Austausch steht, wobei der erste Luftpfad einen Kanal umfasst, der zwischen einer Innenfläche der Kartuschenaufnahme (21) und einer Außenfläche der Kartusche (30, 30a) gebildet ist, wobei der erste Luftpfad von einem Lufteinlass durch den Kanal und zu einer Heizvorrichtung und einem Auslass eines Mundstücks (31, 102, 202, 302) innerhalb der Kartusche (30, 30a) verläuft;
**dadurch gekennzeichnet, dass**
der Verdampfungsvorrichtungskörper (101, 201, 301, 401) weiter umfasst:
eine Dichtung (2502) um den Drucksensor (27, 2509) herum,
einen Mikrocontroller, der dazu eingerichtet ist, Vorgänge durchzuführen, umfassend:
Bestimmen einer Basislinie, basierend auf einem Filtern der momentanen Sensormesswerte, während die momentanen Sensormesswerte von dem Drucksensor (27, 2509) ausgegeben werden;
Konstanthalten der Basislinie auf einem vorherigen Wert, während die von dem Drucksensor (27, 2509) ausgegebenen momentanen Sensormesswerte um einen ersten Schwellenwert oberhalb der Basislinie oder um einen zweiten Schwellenwert unterhalb der Basislinie liegen, wobei der erste Schwellenwert bzw. der zweite Schwellenwert anzeigen, dass an dem Mundstück (31, 102, 202, 302) ausgeatmet oder eingeatmet wird; und
Vergleichen der momentanen Sensormesswerte mit der Basislinie und Aktivieren der Heizvorrichtung, um ein Aerosol aus dem verdampfbaren Material zu erzeugen, wenn die vom Drucksensor (27, 2509) ausgegebenen momentanen Sensormesswerte um mehr als einen dritten Schwellenwert von der Basislinie versetzt sind, wobei der dritte Schwellenwert anzeigt, dass an dem Mundstück (31, 102, 202, 302) eingeatmet wird.

2. Verdampfungsvorrichtungskörper (101, 201, 301, 401) nach Anspruch 1, wobei die Dichtung (2502) dazu eingerichtet ist, den zweiten Luftpfad gegenüber dem ersten Luftpfad abzudichten.

3. Verdampfungsvorrichtungskörper (101, 201, 301, 401) nach Anspruch 1 oder 2, wobei der Drucksensor (27, 2509) eine kapazitive Membran, einen MEMS-Drucksensor oder einen Drucksensor vom Kraftsammlertyp umfasst.

4. Verdampfungsvorrichtungskörper (101, 201, 301, 401) nach einem der vorangegangenen Ansprüche, wobei die von dem Drucksensor (27, 2509) ausgegebenen momentanen Sensorwerte mindestens eines der folgenden umfassen: Kapazitätswerte, nicht umgewandelte Sensorwerte oder Druckwerte.

5. Verdampfungsvorrichtungskörper (101, 201, 301, 401) nach Anspruch 1, wobei der dritte Schwellenwert gleich dem zweiten Schwellenwert ist, oder wobei der dritte Schwellenwert gleich dem ersten Schwellenwert ist, oder wobei der erste Schwellenwert Null ist, oder wobei der zweite Schwellenwert Null ist.

6. Verdampfungsvorrichtungskörper (101, 201, 301, 401) nach einem der Ansprüche 1 bis 5, wobei der Mikrocontroller weiter dazu eingerichtet ist, Vorgänge durchzuführen, die mindestens eines der folgenden umfassen:
Nachverfolgen der Basislinie basierend auf einem Filtern der momentanen Sensormesswerte durch Tiefpassfilterung der momentanen Sensormesswerte;
Nachverfolgen der Basislinie basierend auf einem Filtern der momentanen Sensormesswerte über eine Ausgabe, indem ein laufender Durchschnitt der momentanen Sensormesswerte gebildet wird; Stoppen der Aktivierung der Heizvorrichtung zur Dampferzeugung, wenn die momentanen Sensormesswerte um weniger als den dritten Schwellenwert von der Basislinie versetzt sind.

7. Verdampfungsvorrichtung (10, 100, 200, 300, 400) umfassend:
eine entfernbare Kartusche, und
einen Körper (101, 201, 301, 401), umfassend:
eine Kartuschenaufnahme (21), die dazu eingerichtet ist, die entfernbare Kartusche (30, 30a) aufzunehmen, und
einen Drucksensor (27, 2509), der dazu eingerichtet ist, momentane Sensormesswerte auszugeben,
wobei die entfernbare Kartusche (30, 30a) eine Fluidspeicherkammer (32, 32a), eine Heizkammer (37), ein Mundstück (31, 102, 202, 302), einen mit einer Außenfläche der Kartusche integral ausgebildeten Kanal und eine Lufteinlasspassage umfasst, die von dem Kanal und einer Innenfläche der Kartuschenaufnahme gebildet ist, wenn die Kartusche in die Kartuschenaufnahme eingesetzt ist, wobei der Kanal eine erste Seite der Lufteinlasspassage bildet und eine Innenfläche der Kartuschenaufnahme eine zweite Seite der Lufteinlasspassage bildet, und
wobei ein erster Luftpfad von einer Kanallufteinlassöffnung (50) durch den Lufteinlasskanal (51), der durch den Kanal gebildet wird, in die Heizkammer (37) und durch einen Auslass (47) des Mundstücks (31, 102, 202, 302) verläuft;
wobei eine erste Seite des Drucksensors (27, 2509) dem ersten Luftpfad ausgesetzt ist und eine zweite Seite des Drucksensors (27, 2509) einem zweiten Luftpfadweg ausgesetzt ist, der mit Umgebungsdruck im Austausch steht, **dadurch gekennzeichnet, dass** die Verdampfungsvorrichtung (10, 100, 200, 300, 400) weiter umfasst:
einen Mikrocontroller, der dazu eingerichtet ist, Vorgänge durchzuführen, umfassend:
Bestimmen einer Basislinie, basierend auf einem Filtern der momentanen Sensormesswerte, während die momentanen Sensormesswerte von dem Drucksensor (27, 2509) ausgegeben werden;
Konstanthalten der Basislinie auf einem vorherigen Wert, während die von dem Drucksensor (27, 2509) ausgegebenen momentanen Sensormesswerte um einen ersten Schwellenwert oberhalb der Basislinie oder um einen zweiten Schwellenwert unterhalb der Basislinie liegen, wobei der erste Schwellenwert bzw. der zweite Schwellenwert anzeigen, dass an dem Mundstück (31, 102, 202, 302) ausgeatmet oder eingeatmet wird; und
Vergleichen der momentanen Sensormesswerte mit der Basislinie und Aktivieren der Heizvorrichtung, um ein Aerosol aus dem verdampfbaren Material zu erzeugen, wenn die vom Drucksensor (27, 2509) ausgegebenen momentanen Sensormesswerte um mehr als einen dritten Schwellenwert von der Basislinie versetzt sind, wobei der dritte Schwellenwert anzeigt, dass an dem Mundstück (31, 102, 202, 302) eingeatmet wird.

8. Verdampfungsvorrichtung (10, 100, 200, 300, 400) nach Anspruch 7, wobei der zweite Luftpfad gegenüber dem ersten Luftpfad durch eine Dichtung (2502) um den Drucksensor (27, 2509) herum abgedichtet ist.

9. Verdampfungsvorrichtung (10, 100, 200, 300, 400) nach Anspruch 7 oder 8, wobei der Drucksensor (27, 2509) eine kapazitive Membran, einen MEMS-Drucksensor oder einen Drucksensor vom Kraftsammlertyp umfasst.

10. Verdampfungsvorrichtung (10, 100, 200, 300, 400) nach einem der Ansprüche 7 bis 9, wobei die von dem Drucksensor (27, 2509) ausgegebenen momentanen Sensorwerte mindestens eines der folgenden umfassen: Kapazitätswerte, nicht umgewandelte Sensorwerte oder Druckwerte.

11. Verdampfungsvorrichtung (10, 100, 200, 300, 400) nach Anspruch 7, wobei der dritte Schwellenwert gleich dem zweiten Schwellenwert ist, oder wobei der dritte Schwellenwert gleich dem ersten Schwellenwert ist, oder wobei der erste Schwellenwert Null ist, oder wobei der zweite Schwellenwert Null ist.

12. Verdampfungsvorrichtung (10, 100, 200, 300, 400) nach einem der Ansprüche 7 bis 8, wobei der Mikrocontroller weiter dazu eingerichtet ist, Vorgänge durchzuführen, die mindestens eines der folgenden umfassen:
Nachverfolgen der Basislinie basierend auf einem Filtern der momentanen Sensormesswerte durch Tiefpassfilterung der momentanen Sensormesswerte;
Nachverfolgen der Basislinie basierend auf einem Filtern der momentanen Sensormesswerte über die Ausgabe, indem ein laufender Durchschnitt der momentanen Sensormesswerte gebildet wird;
Stoppen der Aktivierung der Heizvorrichtung zur Dampferzeugung, wenn die momentanen Sensormesswerte um weniger als den dritten Schwellenwert von der Basislinie versetzt sind.

## Revendications

1. Corps (101, 201, 301, 401) de dispositif vaporisateur comprenant :
un réceptacle (21) pour cartouche configuré pour recevoir en insertion une cartouche (30, 30a) contenant une matière vaporisable ;
un capteur (27, 2509) de pression configuré pour délivrer en sortie des mesures de capteur instantanées, dans lequel un premier côté du capteur (27, 2509) de pression est exposé à un premier chemin d'air et un deuxième côté du capteur (27, 2509) de pression est exposé à un deuxième chemin d'air ouvert sur la pression ambiante, le premier chemin d'écoulement d'air comprenant un canal formé entre une surface intérieure du réceptacle (21) pour cartouche et une surface extérieure de la cartouche (30, 30a), dans lequel le premier chemin d'air passe d'une entrée d'air, à travers le canal et jusqu'à un appareil de chauffage et une sortie d'un embout (31, 102, 202, 302) à l'intérieur de la cartouche (30, 30a) ;
**caractérisé en ce que**
le corps (101, 201, 301, 401) de dispositif vaporisateur comprend en outre un joint statique (2502) autour du capteur (27, 2509) de pression,
un microcontrôleur configuré pour exécuter des opérations comprenant :
la détermination d'une ligne de base sur la base d'un filtrage des mesures de capteur instantanées alors que les mesures de capteur instantanées sont délivrées en sortie par le capteur (27, 2509) de pression ;
le maintien de la ligne de base constante à une valeur précédente lorsque les mesures de capteur instantanées sont délivrées en sortie par le capteur (27, 2509) de pression sont au-dessus de la ligne de base d'un premier seuil ou en-dessous de la ligne de base d'un deuxième seuil, le premier seuil et le deuxième seuil indiquant respectivement qu'un souffle ou une aspiration est appliqué(e) à l'embout (31, 102, 202, 302) ; et
la comparaison des mesures de capteur instantanées à la ligne de base et l'activation de l'appareil de chauffage pour générer un aérosol à partir de la matière vaporisable lorsque les mesures de capteur instantanées délivrées en sortie par le capteur (27, 2509) de pression sont décalées par rapport à la ligne de base de plus d'un troisième seuil, le troisième seuil indiquant qu'une aspiration est appliquée à l'embout (31, 102, 202, 302).

2. Corps (101, 201, 301, 401) de dispositif vaporisateur selon la revendication 1, dans lequel le joint statique (2502) est configuré pour sceller le deuxième chemin d'air par rapport au premier chemin d'air.

3. Corps (101, 201, 301, 401) de dispositif vaporisateur selon la revendication 1 ou 2, dans lequel le capteur (27, 2509) de pression comprend une membrane capacitive, un capteur de pression MEMS, ou un capteur de pression de type collecteur de force.

4. Corps (101, 201, 301, 401) de dispositif vaporisateur selon l'une quelconque des revendications précédentes, dans lequel les mesures de capteur instantanées délivrées en sortie par le capteur (27, 2509) de pression comprennent au moins une parmi ce qui suit : des valeurs de capacitance, des mesures de capteur non converties, ou des valeurs de pression.

5. Corps (101, 201, 301, 401) de dispositif vaporisateur selon la revendication 1, dans lequel le troisième seuil est le même que le deuxième seuil, ou dans lequel le troisième seuil est le même que le premier seuil, ou dans lequel le premier seuil est zéro, ou dans lequel le deuxième seuil est zéro.

6. Corps (101, 201, 301, 401) de dispositif vaporisateur selon l'une quelconque des revendications 1 à 5, dans lequel le microcontrôleur est en outre configuré pour exécuter des opérations comprenant au moins un parmi:
le suivi de la ligne de base sur la base d'un filtrage des mesures de capteur instantanées par l'intermédiaire d'un filtrage passe-bas des mesures de capteur instantanées;
le suivi de la ligne de base sur la base d'un filtrage des mesures de capteur instantanées par l'intermédiaire d'une sortie en prenant une moyenne glissante des mesures de capteur instantanées;
l'arrêt de l'activation de l'appareil de chauffage pour générer de la vapeur lorsque les mesures de capteur instantanées sont décalées par rapport à la ligne de base de moins du troisième seuil.

7. Dispositif vaporisateur (10, 100, 200, 300, 400) comprenant :
une cartouche amovible, et
un corps (101, 201, 301, 401) comprenant :
un réceptacle (21) pour cartouche configuré pour recevoir la cartouche amovible (30, 30a), et
un capteur (27, 2509) de pression configuré pour délivrer en sortie des mesures de capteur instantanées,
dans lequel la cartouche amovible (30, 30a) comprend un compartiment (32, 32a) de stockage de fluide, une chambre (37) d'appareil de chauffage, un embout (31, 102, 202, 302), un canal intégré à une surface extérieure de la cartouche et un passage d'entrée d'air formé par le canal et une surface interne du réceptacle pour cartouche lorsque la cartouche est insérée dans le réceptacle pour cartouche, dans lequel le canal forme un premier côté du passage d'entrée d'air, et une surface interne du réceptacle pour cartouche forme un deuxième côté du passage d'entrée d'air, et
dans lequel un premier chemin d'air passe d'une ouverture (50) de canal d'entrée d'air, à travers le passage d'entrée d'air (51) formé par le canal, jusque dans la chambre (37) d'appareil de chauffage et à travers une sortie (47) de l'embout (31, 102, 202, 302) ;
dans lequel un premier côté du capteur (27, 2509) de pression est exposé au premier chemin d'air et un deuxième côté du capteur (27, 2509) de pression est exposé à un deuxième chemin d'air ouvert sur la pression ambiante,
**caractérisé en ce que**
le dispositif vaporisateur (10, 100, 200, 300, 400) comprend en outre :
un microcontrôleur configuré pour exécuter des opérations comprenant :
la détermination d'une ligne de base sur la base d'un filtrage des mesures de capteur instantanées alors que les mesures de capteur instantanées sont délivrées en sortie par le capteur (27, 2509) de pression ;
le maintien de la ligne de base constante à une valeur précédente lorsque les mesures de capteur instantanées sont délivrées en sortie par le capteur (27, 2509) de pression sont au-dessus de la ligne de base d'un premier seuil ou en-dessous de la ligne de base d'un deuxième seuil, le premier seuil et le deuxième seuil indiquant respectivement qu'un souffle ou une aspiration est appliqué(e) à l'embout (31, 102, 202, 302); et
la comparaison des mesures de capteur instantanées à la ligne de base et l'activation de l'appareil de chauffage pour générer un aérosol à partir de la matière vaporisable lorsque les mesures de capteur instantanées délivrées en sortie par le capteur (27, 2509) de pression sont décalées par rapport à la ligne de base de plus d'un troisième seuil, le troisième seuil indiquant qu'une aspiration est appliquée à l'embout (31, 102, 202, 302).

8. Dispositif vaporisateur (10, 100, 200, 300, 400) selon la revendication 7, dans lequel le deuxième chemin d'air est scellé par rapport au premier chemin d'air par un joint statique (2502) autour du capteur (27, 2509) de pression.

9. Dispositif vaporisateur (10, 100, 200, 300, 400) selon la revendication 7 ou 8, dans lequel le capteur (27, 2509) de pression comprend une membrane capacitive, un capteur de pression MEMS, ou un capteur de pression de type collecteur de force.

10. Dispositif vaporisateur (10, 100, 200, 300, 400) selon l'une quelconque des revendications 7 à 9, dans lequel les mesures de capteur instantanées délivrées en sortie par le capteur (27, 2509) de pression comprennent au moins une parmi ce qui suit : des valeurs de capacitance, des mesures de capteur non converties, ou des valeurs de pression.

11. Dispositif vaporisateur (10, 100, 200, 300, 400) selon la revendication 7, dans lequel le troisième seuil est le même que le deuxième seuil, ou dans lequel le troisième seuil est le même que le premier seuil, ou dans lequel le premier seuil est zéro, ou dans lequel le deuxième seuil est zéro.

12. Dispositif vaporisateur (10, 100, 200, 300, 400) selon l'une quelconque des revendications 7 à 8, dans lequel le microcontrôleur est en outre configuré pour exécuter des opérations comprenant au moins un parmi:
le suivi de la ligne de base sur la base d'un filtrage des mesures de capteur instantanées par l'intermédiaire d'un filtrage passe-bas des mesures de capteur instantanées;
le suivi de la ligne de base sur la base d'un filtrage des mesures de capteur instantanées par l'intermédiaire d'une sortie en prenant une moyenne glissante des mesures de capteur instantanées;
l'arrêt de l'activation de l'appareil de chauffage pour générer de la vapeur lorsque les mesures de capteur instantanées sont décalées par rapport à la ligne de base de moins du troisième seuil.
